# EUROPÄISCHE PATENTSCHRIFT

(11) **EP 3 535 509 B1**
(45) Veröffentlichungstag und Bekanntmachung des Hinweises auf die Patenterteilung: **23.09.2020**
(21) Anmeldenummer: 17793953.5
(22) Anmeldetag: 03.11.2017
(51) Int. Cl.: F16K 25/02, F16K 5/06, F16K 5/20

(54) **KUGELHAHN FÜR EIN LEITUNGSSYSTEM ZUR FÖRDERUNG VON FLÜSSIGEN ODER GASFÖRMIGEN MEDIEN**
BALL VALVE FOR A PIPE SYSTEM FOR CONVEYING LIQUID OR GASEOUS MEDIA
ROBINET À BOISSEAU SPHÉRIQUE POUR UN SYSTÈME DE CONDUITES ACHEMINANT DES FLUIDES LIQUIDES OU GAZEUX

(30) Priorität: 04.11.2016 DE 102016121087; 28.07.2017 DE 102017117167
(43) Veröffentlichungstag der Anmeldung: 11.09.2019
(60) Teilanmeldung: 20189640.4
(73) Patentinhaber: Franz Schuck GmbH, 89555 Steinheim (DE)
(72) Erfinder: MENTZEL, Elmar, 12623 Berlin (DE)
(74) Vertreter: Lorenz, Markus
(86) Internationale Anmeldenummer: PCT/EP2017/078254
(87) Internationale Veröffentlichungsnummer: WO 2018/083278

(56) Entgegenhaltungen:
- EP-A1- 0 919 750
- EP-A2- 0 161 056
- DE-B- 1 283 050
- FR-A1- 2 940 828
- US-A- 5 533 738

## Beschreibung

Die Erfindung betrifft einen Kugelhahn für ein Leitungssystem zur Förderung von flüssigen oder gasförmigen Medien nach dem Oberbegriff von Anspruch 1.

Die Erfindung betrifft ferner ein Verfahren nach Anspruch 10 zum Verstellen eines Kugelhahns, wonach der Kugelhahn in ein Leitungssystem zur Förderung von flüssigen oder gasförmigen Medien integriert und zum Öffnen und Schließen von Rohrleitungen verstellt wird.

Die Erfindung betrifft auch ein Verfahren nach Anspruch 11 zum Durchführen wenigstens eines Molchs durch einen in ein Leitungssystem für flüssige oder gasförmige Medien eingesetzten Kugelhahn, wobei der Kugelhahn ein Kugelküken und Sitzringe aufweist, und wonach ein oder mehrere Molche durch einen Leitungsabschnitt, in den der Kugelhahn eingesetzt ist, durchgeführt werden.

Bei den Molchen kann es sich insbesondere um einen oder mehrere Reinigungsmolche handeln, die zum Zwecke der Reinigung durch den Kugelhahn durchgeführt werden.

Die Erfindung betrifft ferner ein Verfahren nach Anspruch 13 zum Reinigen eines Kugelhahns, wonach der Kugelhahn in ein Leitungssystem zur Förderung von flüssigen oder gasförmigen Medien integriert und zum Öffnen und Schließen von Rohrleitungen verstellt wird, und der Kugelhahn ein Kugelküken und Sitzringe aufweist.

Des Weiteren betrifft die Erfindung ein Verfahren nach Anspruch 15 zum Abdichten eines Kugelhahns, wonach der Kugelhahn in ein Leitungssystem zur Förderung von flüssigen oder gasförmigen Medien integriert und zum Öffnen und Schließen von Rohrleitungen verstellt wird, und der Kugelhahn ein Kugelküken und Sitzringe aufweist.

Gattungsgemäße Kugelhähne sind aus den DE 10 2007 062 553A1, EP0 161 056 A2 bekannt.

Kugelhähne werden in vielfältigen Dimensionen als Absperrarmaturen für flüssige und gasförmige Medien eingesetzt. Die Kugelhähne weisen im Regelfall Anschlussstutzen auf, um die Kugelhähne in eine Leitung eines Leitungssystems einzusetzen. Die Kugelhähne weisen jeweils ein Gehäuse auf, welches ein sogenanntes Kugelküken und Sitzringe aufnimmt. In Abhängigkeit der Stellung des Kugelkükens in dem Gehäuse kann die Rohrleitung geöffnet und geschlossen werden. Die Verdrehung des Kugelkükens erfolgt über eine Betätigungseinrichtung, welche zumeist über einen Betätigungszapfen verfügt, der manuell oder automatisiert bedient werden kann, um das Kugelküken zu verdrehen.

Die Kugelhähne können ober- oder unterirdisch eingebaut werden, wobei insbesondere bei einem unterirdischen Einbau die spätere Zugänglichkeit zu Wartungszwecken erschwert ist. Die Betätigungseinrichtung erstreckt sich bei einem unterirdischen Einbau zumeist bis zur Oberfläche, um eine einfache Bedienbarkeit zu gewährleisten.

Zur Abdichtung des Kugelkükens gegenüber den Rohrleitungen, in die der Kugelhahn eingebaut ist, werden Sitzringe verwendet. Die Sitzringe können gegenüber dem Kugelküken metallisch oder weich abdichten. Es sind aus dem Stand der Technik auch Sitzringe bekannt, die primär metallisch und sekundär weich dichten. In Abhängigkeit des Einsatzzweckes werden entweder weich dichtende, metallisch dichtende oder aber auch primär metallisch, sekundär weich dichtende Sitzringe eingesetzt. Die Sitzringe verfügen im Allgemeinen über eine Federeinrichtung, welche den Sitzring gegen das Kugelküken drückt. Besonders vorteilhaft ist es dabei, wenn die Federeinrichtung eine Kraft aufbringt, die dafür sorgt, dass der Sitzring zuverlässig an das Kugelküken gedrückt wird, wenn kein flüssiges oder gasförmiges Medium durch das Leitungssystem strömt oder nur ein geringer Druck im Leitungssystem anliegt. Sobald ein gasförmiges oder flüssiges Medium durch das Leitungssystem strömt, insbesondere mit einem hohen Druck, ist es von Vorteil, wenn durch ein geeignetes Kanalsystem sichergestellt wird, dass der im Leitungssystem bzw. in den Rohrleitungen herrschende Druck verwendet wird, um eine von dem Kugelküken abgewandte Rückseite des Sitzringes zu beaufschlagen, so dass der Sitzring in Abhängigkeit des Drucks, der im Leitungssystem herrscht, an das Kugelküken angedrückt wird. Dies wird als Differenzdruck bzw. Differenzdrucksystem bezeichnet.

Der Vorteil der Verwendung des Drucks im Leitungssystems, um den Sitzring an das Kugelküken anzudrücken, besteht darin, dass die Federeinrichtung entsprechend schwach dimensioniert werden kann, damit die durch die Federeinrichtung bedingte Reibung im System, wenn das Kugelküken gedreht werden soll, möglichst gering gehalten wird. Ferner werden die Drucckräfte gering gehalten und dadurch insbesondere das Dichtungssystem (Sitzring/Kugelküken) geschont.

Dieses ausgereifte System hat sich in der Praxis besonders bewährt. Das System ist vorteilhaft gegenüber der Verwendung einer Federeinrichtung mit einer permanent hohen Druckkraft.

Gleichwohl wäre es auch bei dem ausgereiften System wünschenswert, wenn die Reibung an dem Dichtungssystem (Sitzring/Kugelküken), wenn der Kugelhahn verstellt wird, noch weiter reduziert werden könnte, damit der Verschleiß am Dichtungssystem weiter reduziert wird und gegebenenfalls auch kleinere Antriebe eingesetzt werden können.

Die Erfinder haben ferner erkannt, dass bei einer im Grundsatz zu bevorzugenden Federeinrichtung mit einer vergleichsweise geringen Druckkraft die Gefahr bestehen kann, dass insbesondere beim Reinigen des Leitungssystems die Dichtfunktion des Sitzringes gegenüber dem Kugelküken beeinträchtigt wird.

Insbesondere vor der ersten Inbetriebnahme des Leitungssystems ist es üblich, dass durch das gesamte Leitungssystem und somit auch die dort eingesetzten Kugelküken, sogenannte Molche (Hartgummibälle mit Bürsten), durchgeführt werden. Bekannt sind dabei unter anderem Reinigungsmolche, Füllmolche oder Trocknungsmolche. Die Reinigungsmolche durchlaufen die Rohrleitungen des Leitungssystems und reinigen diese von Verschmutzungen, beispielsweise auch von metallischen Schweißrückständen oder dergleichen. Die Reinigungsmolche bringen dabei eine hohe Kraft auf die Sitzringe auf. Dadurch könnten die Sitzringe entgegen der Federkraft der Federeinrichtung von dem Kugelküken abgehoben werden, wodurch die Gefahr bestehen könnte, dass die mit dem Reinigungsmolch mittransportierten Verschmutzungen unter die Dichtfläche des Sitzringes geschoben werden, so dass der Sitzring nicht mehr abdichtend an dem Kugelküken anliegt.

Während des Molchprozesses findet keine Unterstützung durch den sogenannten Differenzdruck statt. Eine Unterstützung der Federeinrichtung durch einen Differenzdruck ist somit nicht gegeben. Der Sitzring wird daher nur mit der Kraft der Federeinrichtung an das Kugelküken gedrückt. Eine Wahl der Federkraft derart, dass diese mit einem entsprechenden Sicherheitszuschlag der Kraft des Molches widerstehen kann und somit ein Abheben des Sitzringes vom Kugelküken in jeder Situation vermieden wird, kann in nachteilhafter Weise dazu führen, dass die Reibung im System sehr hoch ist und insbesondere die Dichtfläche (Sitzring/Kugelküken) durch den dauerhaften hohen Druck beschädigt und in ihrer Funktion beeinträchtigt wird.

Insbesondere bei einem unterirdischen Einbau des Kugelhahns, der vor allem bei Großkugelhähnen, die zur Förderung von Gas oder Öl Verwendung finden, üblich ist, ist zudem die Zugänglichkeit des Kugelhahns erschwert.

Der vorliegenden Erfindung liegt die Aufgabe zugrunde, die Nachteile des Standes der Technik zu lösen, insbesondere einen Kugelhahn so zu optimieren, dass die Druckbelastung auf die Dichtfläche zwischen dem Sitzring und dem Kugelküken möglichst gering ist.

Der vorliegenden Erfindung liegt ferner die Aufgabe zugrunde, ein Verfahren zum Verstellen eines Kugelhahns zu schaffen, bei dem die Dichtfläche zwischen dem Kugelhahn und dem Sitzring möglichst wenig belastet wird.

Der vorliegenden Erfindung liegt auch die Aufgabe zugrunde, ein Verfahren zum Durchführen wenigstens eines Molchs durch einen in ein Leitungssystem für flüssige oder gasförmige Medien eingesetzten Kugelhahn zu schaffen, bei dem der Kugelhahn möglichst nicht beeinträchtigt wird.

Der vorliegenden Erfindung liegt ferner die Aufgabe zugrunde, ein Verfahren zum Reinigen eines Kugelhahns zu schaffen, bei dem insbesondere die Dichtfläche bzw. ein Sitzringspalt zwischen dem Kugelhahn und dem Sitzring zuverlässig von Ablagerungen befreit wird.

Des Weiteren liegt der Erfindung die Aufgabe zugrunde, ein Verfahren zum Abdichten eines Kugelhahns, insbesondere eine Notabdichtung bei Beschädigung der Dichtfläche zwischen einem der Sitzringe und dem Kugelküken, bereitzustellen.

Die Aufgabe wird hinsichtlich des Kugelhahns durch Anspruch 1 gelöst.

Ein vorteilhaftes Verfahren zum Verstellen eines Kugelhahns zum Öffnen und Schließen von Rohrleitungen ergibt sich aus Anspruch 10.

Ein vorteilhaftes Verfahren zum Durchführen wenigstens eines Molchs durch einen in ein Leitungssystem eingesetzten Kugelhahn ergibt sich aus Anspruch 11.

Ein vorteilhaftes Verfahren zum Reinigen eines Kugelhahns ergibt sich aus Anspruch 13.

Ein vorteilhaftes Verfahren zum Abdichten eines Kugelhahns, insbesondere für eine Notabdichtung, ergibt sich aus Anspruch 15.

Dadurch, dass erfindungsgemäß ein vom Druck des durch das Leitungssystem strömenden flüssigen oder gasförmigen Mediums unabhängiges Drucksystem, insbesondere ein Hydrauliksystem, vorgesehen ist, um den Anpressdruck wenigstens eines der Sitzringe auf das Kugelküken zu verändern, lässt sich bei Bedarf die Kraft, mit der der wenigstens eine Sitzring an das Kugelküken gedrückt wird, verändern, insbesondere reduzieren oder verstärken. Hieraus resultieren verschiedene Vorteile. Die erfindungsgemäße Lösung ermöglicht es, den Kugelhahn derart auszulegen, dass im Normalbetrieb des Leitungssystems, das heißt wenn flüssiges oder gasförmiges Medium durch das Leitungssystem strömt, eine zuverlässige Abdichtung zwischen dem Sitzring und dem Kugelküken gewährleistet ist.

Im Rahmen der Erfindung werden Begriffe wie Drucksystem, Druckkanal, Medium, Druck, Druckeinheit und dergleichen verwendet. Die Verwendung derartiger Begriffe, insbesondere auch in den Ansprüchen, soll, wie auch im weiteren Verlauf der Beschreibung ausgeführt, verdeutlichen, dass für die Erfindung sowohl flüssige als auch gasförmige Medien für das Drucksystem und dessen Teile sowie dessen Funktionsprinzip Verwendung finden können. Die Erfindung gilt für flüssige und für gasförmige Medien gleichermaßen.

Insofern im Rahmen der Erfindung, insbesondere in den Ansprüchen und der nachfolgenden Beschreibung, anstelle der allgemeinen Begriffe (z. B. Drucksystem, Druckkanal, Druck, Medium oder Druckeinheit) spezifischere, typischerweise auf ein flüssiges Medium hinweisende Begriffe, wie z. B. Hydrauliksystem, Hydraulikkanal, Hydraulikmedium, Hydraulikdruck oder Hydraulikeinheit Verwendung finden, ist dies nicht so zu verstehen, dass dadurch die Verwendung eines gasförmigen Mediums ausgeschlossen werden soll. Auch die Verwendung dieser Begriffe gilt gleichermaßen für die Verwendung von flüssigen oder gasförmigen Medien für das erfindungsgemäße Drucksystem bzw. das erfindungsgemäße Hydrauliksystem bzw. soll als Offenbarung sowohl für die Verwendung flüssiger als auch gasförmiger Medien verstanden werden.

Wie in der weiteren Beschreibung ausgeführt, kann die Wahl des Mediums für das Drucksystem vorzugsweise davon abhängig gemacht werden, welches Medium in dem Leitungssystem bzw. in den Rohrleitungen des Leitungssystems transportiert wird.

Im Rahmen der Erfindung kann vorgesehen sein, dass, wenn Wasser in Rohrleitungen transportiert wird als Medium für das Drucksystem vorzugsweise ein Gas, insbesondere Stickstoff verwendet wird.

Es kann hierzu von Vorteil sein, wenn zusätzlich zu dem Differenzdruck, der an einer Rückseite des Kugelhahns wirkt, auch noch eine Federeinrichtung vorgesehen ist, damit auch bei geringeren Drücken im Leitungssystem oder wenn kein flüssiges oder gasförmiges Medium durch das Leitungssystem gefördert wird, ein zuverlässiges Abdichten zwischen dem Kugelküken und dem Sitzring gewährleistet ist.

Die erfindungsgemäße Lösung ermöglicht es, bei einem Verstellen des Kugelhahns, das heißt, wenn das Kugelküken zum Öffnen oder Schließen des Leitungssystems, insbesondere zum Öffnen oder Schließen von Rohrleitungen des Leitungssystems, gedreht wird, die Belastung auf die Dichtfläche zwischen dem Sitzring und dem Kugelküken zu reduzieren. Dies ist durch das erfindungsgemäße, vom Druck im Leitungssystem unabhängige, Hydrauliksystem möglich, durch welches der Druck, mit dem der Sitzring auf das Kugelküken gedrückt wird, verstärkt oder reduziert werden kann.

Zum Verstellen des Kugelhahns kann vorgesehen sein, dass bereits zu Beginn des Verstellvorgangs und/oder auch während des Verstellvorgangs durch das Hydrauliksystem der Druck, mit dem der Sitzring auf das Kugelküken gepresst wird, reduziert wird. Dadurch wird die Reibung an der Dichtfläche zwischen dem Sitzring und dem Kugelküken und somit auch das Schaltdrehmoment reduziert. Beschädigungen des Kugelkükens werden dadurch deutlich reduziert oder ausgeschlossen. Der Verschleiß und somit die Haltbarkeit bzw. die Lebensdauer des Kugelhahns wird dadurch erhöht. Ferner werden zum Verstellen des Kugelkükens, was insbesondere bei Großkugelhähnen von besonderer Bedeutung ist, geringere Drehmomente benötigt, wodurch auch die Antriebseinrichtung kleiner ausgelegt werden kann.

Ein weiterer Vorteil der Erfindung besteht darin, dass durch die Reduzierung der Anpresskraft des Sitzrings auf das Kugelküken eventuell an der Dichtfläche vorhandene Schmutzeinlagerungen, die beispielsweise beim Molchen entstanden sein könnten, ausgespült bzw. ausgeblasen werden können, wodurch die Schmutzeinlagerungen keine Beschädigungen an den Dichtflächen verursachen, wenn das Kugelküken gedreht wird.

Der Sitzring kann hierzu gegebenenfalls von dem Kugelküken abgehoben werden.

Die erfindungsgemäße Lösung ermöglicht es ferner, dass, wenn der Sitzring auf dem Kugelküken festsitzt durch eine Reduzierung des Drucks auf den Sitzring dessen Abheben und somit die Verdrehung des Kugelkükens erleichtert werden kann.

Die erfindungsgemäße Lösung ermöglicht es, den Anpressdruck des Sitzrings auf das Kugelküken bedarfsweise einzustellen, insbesondere zu reduzieren, aber auch zu erhöhen.

Eine Erhöhung des Drucks kann auch zur Notfallabdichtung vorgesehen sein.

Eine Erhöhung des Drucks kann insbesondere dann vorgesehen sein, wenn ein Molch durch das Rohrleitungssystem, insbesondere zu Reinigungszwecken, bewegt wird.

Vorzugsweise ist vorgesehen, dass das Hydrauliksystem eingesetzt wird, wenn der Kugelhahn verstellt, insbesondere das Kugelküken zwischen einer geöffneten Position und einer geschlossenen Position (und umgekehrt) bewegt werden soll oder ein Molch durch das Leitungssystem bewegt wird.

Von Vorteil ist es, wenn das Hydrauliksystem im Normalbetrieb bzw. wenn das Kugelküken nicht bewegt wird, nicht eingesetzt bzw. verwendet wird, so dass im Normalbetrieb die Anpresskraft durch den Differenzdruck und/oder durch eine Federeinrichtung erzeugt wird.

Durch die erfindungsgemäße Lösung sind die Sitzringe individuell und situationsabhängig steuerbar.

Vorzugsweise ist vorgesehen, dass beide Sitzringe jeweils gleichermaßen angesteuert bzw. der Druck entsprechend gleichmäßig geregelt wird. Dies ist allerdings nicht zwingend.

Die erfindungsgemäße Lösung ermöglicht es, dass, wenn ein Reinigungsmolch das Leitungssystem durchläuft, die Kraft, mit der der Sitzring an das Kugelküken gedrückt wird, so erhöht werden kann, dass der Reinigungsmolch den Sitzring nicht von dem Kugelküken abheben kann. Es wird somit vermieden, dass der Reinigungsmolch die von diesem mittransportierten Verunreinigungen, beispielsweise metallische Ablagerungen, zwischen Dichtfläche, Sitzringe und Kugel schiebt bzw. die Dichtfläche des Sitzrings beschädigt. Die Abdichtung zwischen dem Sitzring und dem Kugelküken wird somit nicht beeinträchtigt.

Sobald die Notwendigkeit einer erhöhten Andruckkraft nicht mehr besteht, kann der durch das Hydrauliksystem erzeugte hydraulische Druck, welcher den wenigstens einen Sitzring an das Kugelküken andrückt, wieder reduziert bzw. vollständig aufgehoben werden. Es ist somit insbesondere möglich, eine vergleichsweise schwache und als geeignet erkannte Federeinrichtung einzusetzen, die lediglich eine Kraft aufbringt, die ausreichend ist, den Sitzring im drucklosen Zustand des Leitungssystems bzw. wenn im Leitungssystem nur ein geringer Druck herrscht, zuverlässig gegen das Kugelküken anzudrücken.

Die Funktion der Federkraft kann gegebenenfalls auch von dem erfindungsgemäßen Hydrauliksystem mitübernommen werden, es ist jedoch günstiger, hierfür eine Federeinrichtung einzusetzen.

Von Vorteil ist es, wenn für jeden Sitzring eine Federeinrichtung vorgesehen ist, um den Sitzring gegen das Kugelküken zu drücken.

Es ist ferner von Vorteil, wenn das erfindungsgemäße Hydrauliksystem beide Sitzringe mit einem hydraulischen Druck beaufschlagen kann. Insofern das Kugelküken mehr als zwei Sitzringe aufweist, kann auch vorgesehen sein, dass mehrere Sitzringe hydraulisch beaufschlagt sind. Die nachfolgend beschriebene Erfindung lässt sich unabhängig davon realisieren, ob ein oder mehrere Sitzringe durch das Hydrauliksystem hydraulisch an das Kugelküken gedrückt werden. Grundsätzlich ist es möglich, für jeden Sitzring ein eigenes Hydrauliksystem bzw. eine eigene Hydraulikpumpe vorzusehen. Von Vorteil ist es jedoch, wenn ein Verteilerblock vorgesehen ist, an dem eine gemeinsame oder zwei oder mehrere getrennte Anschlussleitungen zur Zuführung des Hydraulikmediums zu den Sitzringen angeschlossen sind. Dabei kann vorgesehen sein, dass jede Anschlussleitung über einen getrennt oder gemeinsam schaltbaren Absperrhahn verfügt.

Erfindungsgemäß umfasst das Hydrauliksystem wenigstens einen Hydraulikkanal, der geeignet ist, ein Hydraulikmedium einer von dem Kugelküken abgewandten Rückseite des Sitzrings zuzuführen oder von dort abzuleiten, um den Hydraulikdruck auf den Sitzring zu verändern. Besonders einfach lässt sich die Zuführung zu den Sitzringen realisieren, wenn das Gehäuse, das den Sitzring umgibt, geeignete Bohrungen aufweist, an die dann außerhalb des Gehäuses verlaufende Leitungen angeschlossen sind.

Erfindungsgemäß ist zwischen der Rückseite des Sitzrings und einer angrenzenden, dem Sitzring zugewandten Innenwandfläche des Gehäuses ein ringförmig umlaufender Ringraum ausgebildet, mit dem der Hydraulikkanal korrespondiert. Bei dem Hydraulikkanal kann es sich vorzugsweise um eine Bohrung in dem Gehäuse des Kugelhahns handeln bzw. eine entsprechende Bohrung kann einen Teil des Hydraulikkanals bilden.

Von Vorteil ist es, wenn der Ringraum durch eine erste Abdichtung und eine zweite Abdichtung begrenzt ist, welche derart angeordnet sind, dass das von dem Hydraulikkanal zugeführte Hydraulikmedium eine Hydraulikkraft erzeugt, die direkt auf die Rückseite des Sitzrings einwirkt. Das Hydrauliksystem kann somit den Anpressdruck des Sitzrings auf das Kugelküken unmittelbar beeinflussen. Von besonderem Vorteil ist es dabei, dass das Hydrauliksystem den Druck im Ringraum nicht nur erhöhen, sondern auch reduzieren kann. Das heißt, das Hydrauliksystem kann, insbesondere durch den Hydraulikkanal, auch Druck aus dem Ringraum ablassen.

Üblicherweise herrscht in dem Ringraum, welcher an die Rückseite eines Sitzrings angrenzt, der vorgenannte Differenzdruck, wenn durch die Rohrleitungen des Leitungssystems ein flüssiges oder gasförmiges Medium transportiert wird. Insbesondere wenn der Kugelhahn verstellt wird, das heißt das Kugelküken verdreht werden soll, kann durch eine entsprechende Steuerung des Hydrauliksystems durch den Hydraulikkanal Druck aus dem Ringraum abgelassen und somit die Anpresskraft des Sitzrings auf das Kugelküken reduziert werden. Hierzu können Maßnahmen vorgesehen sein, die sicherstellen, dass der Druck in dem Ringraum unterhalb des Drucks in dem Leitungssystem bzw. in den Rohrleitungen reduzierbar ist. Dies kann insbesondere dadurch erreicht werden, dass eine Verbindung des Ringraums mit Kammern oder Räumen, in denen der Druck des Leitungssystems herrscht, unterbunden bzw. unterbrochen wird.

Bei Kugelhähnen gemäß dem Stand der Technik ist typischerweise vorgesehen, dass, damit das Differenzdrucksystem wirkt, der Ringraum mit einem sogenannten Totraum verbunden ist, der sich zwischen den Sitzringen und einer Oberseite des Kugelkükens und einer Innenwandfläche des Gehäuses befindet.

Von Vorteil ist es, wenn die erste Abdichtung zwischen der Innenwandfläche des Gehäuses und dem Sitzring angeordnet ist und den Ringraum zu einem Totraum abdichtet, wobei in dem Totraum im Normalbetrieb des Leitungssystems ein Druck anliegt, der dem Druck in Rohrleitungen des Leitungssystems, durch welche das flüssige oder gasförmige Medium transportiert wird, entspricht.

Durch diese Anordnung der ersten Abdichtung wird die Verbindung, nämlich ein ringförmig umlaufender Spalt, zwischen dem Ringraum eines der Sitzringe und dem Totraum abgedichtet, so dass der Druck im Ringraum gegebenenfalls durch das Hydrauliksystem unabhängig vom Druck im Leitungssystem eingestellt werden kann. Im Stand der Technik war zwischen dem Außenumfang des Sitzrings und der umgebenden Innenwandfläche des Gehäuses ein Spalt vorhanden, welcher einen Druckausgleich zwischen dem Ringraum und dem Totraum ermöglicht hat bzw. hierfür vorgesehen ist. Dieser Spalt wird vorzugsweise durch die erste Abdichtung verschlossen.

Von Vorteil ist es, wenn die erste Abdichtung als Kolbendichtung ausgebildet ist und vorzugsweise wenigstens einen O-Ring und eine Gleitringdichtung bzw. einen Gleitring aufweist, wobei der O-Ring vorzugsweise an der von der Innenwandfläche abgewandten Rückseite der Gleitringdichtung angeordnet ist.

Grundsätzlich ist eine beliebige Gestaltung der ersten Abdichtung möglich. Eine Ausgestaltung als Kolbendichtung bzw. mit einem O-Ring und einer Gleitringdichtung hat sich jedoch als besonders geeignet herausgestellt.

Grundsätzlich kann jedoch auch ein einteiliger Aufbau, gegebenenfalls auch nur ein O-Ring, oder eine Gestaltung, wie dies bei der zweiten Abdichtung vorgesehen ist, realisiert sein.

Bei einem zwei- oder mehrteiligen Aufbau kann auch vorgesehen sein, dass der O-Ring an der Innenwandfläche anliegt und ein Anpressring oder ein anderes Element an der von der Innenwandfläche abgewandten Rückseite des O-Rings angeordnet ist.

Vorzugsweise weist der Sitzring oder die Innenwandfläche eine Nut, vorzugsweise eine ringförmig umlaufende Nut, auf, in die die erste Abdichtung zumindest teilweise eingesetzt ist. Gegebenenfalls können auch Nuten sowohl im Sitzring als auch in der angrenzenden Innenwandfläche zur Aufnahme der ersten Abdichtung vorgesehen sein.

Zur Optimierung des erfindungsgemäßen Hydrauliksystems hat es sich als besonders geeignet herausgestellt, dass die erste Abdichtung eine Verbindung zwischen dem Ringraum und dem Totraum verschließt. Um dennoch ein Differenzdrucksystem, insbesondere im Normalbetrieb, einsetzen zu können, können andere Maßnahmen getroffen werden.

Erfindungsgemäß weist das Hydrauliksystem eine Bypassleitung auf, um bei Bedarf einen Druckausgleich zwischen dem Ringraum und dem Totraum herzustellen. Bei der Bypassleitung kann es sich um eine Leitung, die innerhalb und/oder außerhalb des Gehäuses verläuft und/oder eine Bohrung im Gehäuse, handeln.

Die Bypassleitung ermöglicht es, dass zwischen dem Ringraum und dem Totraum eine Verbindung hergestellt werden kann, insbesondere um das bekannte Differenzdrucksystem nutzen zu können.

Erfindungsgemäß weist das Hydrauliksystem wenigstens ein Absperrelement, zum Beispiel einen Kugelhahn oder ein Ventil, auf, um die Bypassleitung zu öffnen oder zu schließen. Somit kann bei Bedarf das Differenzdrucksystem genutzt werden, wobei gleichzeitig, insbesondere durch ein Schließen des Absperrelements sichergestellt werden kann, dass der Ringraum von dem Hydrauliksystem auch unabhängig vom Druck im Leitungssystem unter Druck gesetzt oder der Druck reduziert werden kann.

Erfindungsgemäß kann vorgesehen sein, dass der Druck, der auf den wenigstens einen Sitzring einwirkt, auf den Druck im Leitungssystem und/oder einen Druck, der höher ist als der Druck im Leitungssystem und/oder ein Druck, der geringer ist als der Druck im Leitungssystem einstellbar ist.

Die Einstellung auf einen Druck, der dem Druck im Leitungssystem entspricht, lässt sich besonders vorteilhaft beispielsweise dadurch erreichen, dass eine Verbindung zwischen dem Totraum und dem Ringraum geöffnet ist bzw. auf andere Weise sichergestellt ist, dass der Druck im Leitungssystem auch im Ringraum herrscht.

Die Steuerbarkeit des Sitzringsystems ist insbesondere durch die Herstellung eines Differenzdrucks zwischen Totraum und Ringraum gegeben.

Ein niedrigerer Druck im Ringraum gegenüber dem Druck im Leitungssystem und somit dem Totraum bewirkt ein Abheben des Sitzringsystems von der Kugeloberfläche.

Ein höherer Druck im Ringraum gegenüber dem Totraum bewirkt, dass das Sitzringsystem mit größerer und zusätzlicher Kraft an die Kugel angepresst wird.

Dieser höhere Druck im Ringraum lässt sich insbesondere dadurch erreichen, dass das Hydrauliksystem einen entsprechenden Druck zur Verfügung stellt und vorzugsweise sichergestellt ist, dass der Druck im Ringraum nicht bzw. nicht wesentlich entweicht. Dies kann beispielsweise durch das Schließen eines entsprechenden Absperrelements bzw. das Schließen einer Bypassleitung, die zum Totraum führt, erreicht werden. Ferner wird dies vorzugsweise dadurch erreicht, dass ein ringförmiger Spalt zwischen dem Außenumfang des Sitzrings und einer Innenwandfläche des Gehäuses durch eine Abdichtung verschlossen ist, während vorzugsweise gleichzeitig über ein zu öffnendes Absperrelement der Druck des Leitungssystems im Totraum vermindert wird. Vorteilhaft wird hierzu die üblicherweise vorhandene Entlüftungsleitung des Kugelhahnes gegenüber Atmosphäre geöffnet.

Alternativ ist auch eine Druckerhöhung des Ringraumes durch die Anwendung einer separaten Druckerzeugung (Hydraulikpumpe oder Drucklufteinrichtung) möglich.

Eine Reduzierung des Drucks im Leitungssystem lässt sich vorzugsweise in gleicher Weise durch das Hydrauliksystem erreichen. Hierzu kann vorzugsweise vorgesehen sein, dass beispielsweise die Bypassleitung oder eine andere Leitung, mit der der Ringraum mit dem Druck im Leitungssystem versorgt werden kann, geschlossen wird, und das Hydrauliksystem gleichzeitig dafür sorgt, dass, beispielsweise durch die erwähnten Hydraulikkanäle oder ein Ventil, Druck aus dem Ringraum abgelassen wird, beispielsweise auch soweit, dass der herkömmliche Atmosphärendruck im Ringraum herrscht.

Möglich ist es auch, dass das Hydrauliksystem derart ausgelegt ist, dass der Druck aus dem Ringraum aktiv abgeleitet wird, beispielsweise indem das Hydraulikmedium abgepumpt oder abgesaugt wird.

Der Druck im Ringraum wird vorzugsweise durch ein flüssiges oder gasförmiges Medium erzeugt. Wenn durch das Leitungssystem ein gasförmiges Medium transportiert wird, ist vorzugsweise vorgesehen, dass auch das Hydrauliksystem einen Gasdruck erzeugt. Wenn durch das Leitungssystem ein flüssiges Medium transportiert wird, ist analog vorgesehen, dass das Hydrauliksystem einen entsprechenden Druck unter Verwendung eines flüssigen Mediums herstellt.

Erfindungsgemäß kann vorgesehen sein, dass eine Steuereinrichtung vorgesehen ist, um die Hydraulikkanäle und/oder eine Hydraulikeinheit derart zu steuern, dass unabhängig von dem durch das Leitungssystem strömenden Medium ein Hydraulikdruck auf die Rückseite wenigstens eines der Sitzringe aufbringbar ist.

Durch eine Steuereinrichtung lässt sich der Hydraulikdruck auf die Rückseite wenigstens eines der Sitzringe in besonders einfacher Weise einstellen.

Von Vorteil ist es, wenn die Steuereinrichtung ausgebildet ist, um den Hydraulikdruck an der Rückseite des Sitzrings auf einen Druck unterhalb des Drucks im Leitungssystem zu reduzieren.

Die Hydraulikeinrichtung ist somit erfindungsgemäß nicht nur vorgesehen, um den Druck im Ringraum zu erhöhen, sondern auch um diesen, insbesondere um den Kugelhahn zu verstellen, auch auf einen Druck unterhalb des Drucks im Leitungssystem zu reduzieren.

Nachfolgend wird eine alternative oder ergänzende Möglichkeit dargestellt, den Sitzring an das Kugelküken anzupressen. Ergänzend oder alternativ dazu, dass der Druck im Ringraum erhöht oder abgesenkt wird, kann vorgesehen sein, dass der Sitzring in der nachfolgend beschriebenen Art und Weise an das Kugelküken angedrückt wird. Die hierfür vorgesehene und nachfolgend beschriebene Dicht- und Anpresseinrichtung eignet sich primär, um den Druck, insbesondere zum Molchen, auf den Sitzring zu erhöhen. Die Erfinder haben jedoch erkannt, dass die nachfolgend beschriebene Verwendung einer Dicht- und Anpresseinrichtung nicht notwendig ist, da es genügt, den Druck im Ringraum bei Bedarf entsprechend zu erhöhen, ohne dass hierfür eine zusätzliche Dicht- und Anpresseinrichtung, wie nachfolgend beschrieben, notwendig ist. Gleichwohl kann insbesondere für spezifische Anwendungen eine derartige Ausgestaltung ergänzend oder alternativ vorgesehen und hilfreich sein.

In der alternativen oder ergänzenden Ausgestaltung der Erfindung kann vorgesehen sein, dass in dem Ringraum oder im Bereich einer Auslassöffnung des Hydraulikkanals eine ringförmig ausgebildete Dicht- und Anpresseinrichtung eingesetzt ist. Von Vorteil kann es dabei sein, wenn der Ringraum eine axiale Erstreckung aufweist, die größer ist als die axiale Erstreckung der Dicht- und Anpresseinrichtung, so dass die Dicht- und Anpresseinrichtung axial innerhalb des Ringraums verschiebbar ist. Die Verschiebung kann sich dabei in Abhängigkeit davon ergeben, ob das Hydrauliksystem einen hydraulischen Druck aufbaut, oder ob ein durch das Leitungssystem strömendes flüssiges oder gasförmiges Medium einen entsprechenden Druck im Ringraum aufbaut.

Von Vorteil ist es, wenn die Dicht- und Anpresseinrichtung wenigstens einen O-Ring und einen Anpressring bzw. einen Segmentring aufweist. Der Anpressring kann vorzugsweise aus Kunststoff, aber auch aus Metall gebildet sein. Besonders eignet sich eine Ausgestaltung als PTFE-Ring gegebenenfalls mit einem Glasfaseranteil. Vorzugsweise ist der O-Ring an der von dem Sitzring abgewandten Rückseite des Anpressrings angeordnet. Die Kombination aus einem vorzugsweise abdichtenden O-Ring und einem Anpressring bzw. einem Segmentring hat sich als besonders geeignet herausgestellt, um einen hohen Druck auf den Sitzring aufzubringen, so dass der Sitzring gegen das Kugelküken gepresst wird.

In einer konstruktiven Ausgestaltung der Dicht- und Anpresseinrichtung kann vorgesehen sein, dass die dem Sitzring zugewandte Vorderseite des Anpressrings Einkerbungen, Nuten oder Kanäle derart aufweist, dass zwischen der Vorderseite des Anpressrings und dem Sitzring wenigstens partiell ein flüssiges oder gasförmiges Medium durchströmen kann.

Die Erfinder haben erkannt, dass es, um die Dicht- und Anpresseinrichtung besonders vorteilhaft zu integrieren, von Vorteil sein kann, wenn die Dicht- und Anpresseinrichtung in dem Ringspalt in axialer Richtung bewegbar ist, in Abhängigkeit davon, auf welcher Seite Druck auf die Dicht- und Anpresseinrichtung aufgebracht wird. Dabei kann vorgesehen sein, dass auf die Dicht- und Anpresseinrichtung an deren Rückseite, das heißt an der dem Sitzring abgewandten Seite, ein hydraulischer Druck aufgebaut wird, wenn das erfindungsgemäße Hydrauliksystem wirkt bzw. aktiviert ist. Umgekehrt kann sich, wenn typischerweise im Normalbetrieb flüssiges oder gasförmiges Medium durch das Leitungssystem strömt, ein Druck an der dem Sitzring zugewandten Vorderseite der Dicht- und Anpresseinrichtung aufbauen. Um zu vermeiden, dass die Dicht- und Anpresseinrichtung an dem Sitzring anhaftet und sich somit bei einer Änderung der Druckverhältnisse nicht löst, ist es von Vorteil, wenn die Vorderseite des Anpressrings derart gestaltet ist, dass zwischen der Vorderseite des Anpressrings und dem Sitzring ein flüssiges oder gasförmiges Medium durchströmen bzw. unter die Vorderseite des Anpressrings gelangen kann. Die Dicht- und Anpresseinrichtung kann sich somit leicht von dem Sitzring ablösen, wenn sich die Druckverhältnisse ändern.

Nachfolgend wird ein für die erfindungsgemäße Lösung vorteilhaftes Differenzdrucksystem beschrieben, das entsprechend oder hinsichtlich der Leitungsführung auch abgewandt, vorzugsweise bei allen Ausführungsformen einsetzbar ist. Das Differenzdruckkanalsystem eignet sich insbesondere dazu, während des Normalbetriebs eine dichtende Anlage des Sitzrings an dem Kugelküken zu gewährleisten, insbesondere auch dann, wenn das Kugelküken nicht gedreht wird.

Von Vorteil ist es, wenn das Gehäuse und/oder die Sitzringe bzw. wenigstens einer der Sitzringe ein Differenzdruckkanalsystem aufweist, um die Sitzringe (oder den wenigstens einen Sitzring) in Abhängigkeit des Drucks des durch das Leitungssystem strömenden flüssigen oder gasförmigen Mediums an das Kugelküken zu drücken.

Derartige Differenzdruckkanalsysteme sind aus dem Stand der Technik hinlänglich bekannt und beruhen im Wesentlichen darauf, dass durch das Differenzdruckkanalsystem erreicht wird, dass der Druck, der im Leitungssystem herrscht, an einer vom Kugelküken abgewandten Fläche der Rückseite des Sitzringes anliegt, die größer ist als die Fläche, an der der Druck auf die Vorderseite des Sitzringes einwirkt. Wenn nun die Fläche an der Rückseite des Sitzrings größer ist als die Fläche an der Vorderseite, erhöht sich bei steigendem Druck im Leitungssystem der Druck, mit dem der Sitzring auf das Kugelküken gedrückt wird. Der Druck ergibt sich vereinfacht dargestellt aus der Formel "Differenzfläche" (Fläche an der Rückseite minus Fläche an der Vorderseite) x "Druck im Leitungssystem".

Aus dem Stand der Technik sind sogenannte "Single Piston"- und "Double Piston"-Systeme bekannt. "Single Piston"-Systeme werden überwiegend bei flüssigen (nicht komprimierbaren) Medien eingesetzt. "Double Piston"-Systeme werden überwiegend bei gasförmigen (komprimierbaren) Medien eingesetzt. Bei "Double Piston"-Systemen dichtet der Sitzring auch bei Druckbelastung aus dem Totraum, d. h. dem ringförmigen Raum, der an seiner Innenseite von dem Kugelküken und an der Außenseite von dem Gehäuse sowie in axialer Richtung von den beiden Sitzringen begrenzt wird. Bei der "Single Piston"-Ausführung öffnen und entlasten die Sitzringe bei Druck im Totraum und ermöglichen somit ein Ausströmen des Mediums aus dem Totraum.

Bei "Double Piston"-Systemen ist die Ein- und Ausgangsseite durch die Sitzringe abgedichtet, während bei den "Single Piston"-Systemen die Ausgangsseite ein Abfließen von Medium ermöglichen kann.

Von Vorteil ist es, wenn das Hydrauliksystem eine Hydraulikeinheit, z. B. eine motorbetriebene Pumpe, zur Erzeugung und/oder zur Reduzierung eines hydraulischen Drucks und/oder einen Anschluss zum Anschließen einer Hydraulikeinheit zur Erzeugung und/oder zur Reduzierung eines hydraulischen Drucks, aufweist. Die Erfinder haben erkannt, dass es ausreichend sein kann, wenn ein Anschluss zum Anschließen einer Hydraulikeinheit vorgesehen ist. Dabei kann es sich gegebenenfalls auch nur um eine Handpumpe handeln. Eine Handpumpe genügt insbesondere dann, wenn das Leitungssystem gereinigt werden soll bzw. das Durchführen eines Molchs vorgesehen ist. Im Regelfall erfolgt dies nur einmalig vor Inbetriebnahme des Leitungssystems, daher kann es aus Kostengründen von Vorteil sein, lediglich einen Anschluss für eine Hydraulikeinheit vorzusehen.

Insofern eine Verwendung des Hydrauliksystems auch vorgesehen ist, um den Druck im Leitungssystem auch während des Betriebs zu verändern, insbesondere auch zu reduzieren, beispielsweise wenn der Kugelhahn verstellt werden soll, ist es von Vorteil, wenn eine entsprechende Hydraulikeinheit dauerhaft angeschlossen ist.

Von Vorteil ist es, wenn das Hydrauliksystem ein Manometer und/oder ein Druckbegrenzungsventil aufweist. Um eine Beschädigung im Leitungssystem zu vermeiden, ist es von Vorteil, wenn der Druck möglichst exakt eingestellt, überwacht und gegebenenfalls abgelassen werden kann.

Die Erfinder haben erkannt, dass es beim Molchen von Vorteil ist, den Hydraulikdruck des Hydrauliksystems derart zu wählen, dass der jeweilige Sitzring mit einer Kraft, die einer Gewichtskraft von 5 bis 20 Tonnen entspricht, vorzugsweise 8 bis 10 Tonnen, gegen das Kugelküken drückt. Insbesondere in Kombination mit einer Federeinrichtung, die vorzugsweise eine Kraft, die einer Gewichtskraft von 2 bis 2,5 Tonnen entspricht, aufbringt, ergibt sich somit eine Kraft, durch die zuverlässig gewährleistet wird, dass der Reinigungsmolch den Sitzring nicht von dem Kugelküken abhebt.

Die erfindungsgemäße Lösung eignet sich sowohl für "Single Piston"-Systeme als auch für "Double Piston"-Systeme. Die Erfindung eignet sich außerdem für beliebige Sitzringe, unabhängig davon, ob diese metallisch oder weich abdichten oder ob eine primär metallische, sekundär weiche Abdichtung (Dichtfläche zum Kugelküken) vorgesehen ist.

Bei einem primär metallisch, sekundär weich dichtenden Sitzring kann eine metallische Dichtung plus Elastomerdichtung vorgesehen sein. Eine derartige Dichtung hat sich als besonders verschleißbeständig und schmutzunempfindlich herausgestellt. Bei einem weich dichtenden Sitzring kann vorgesehen sein, dass die Dichtung über einen Dichtring aus Kunststoff erfolgt, als Materialien können hier beispielsweise PTFE, PA oder PEEK eingesetzt werden. Bei einem metallisch dichtenden Sitzring erfolgt die Dichtung über einen metallischen Kontakt mit dem Kugelküken.

Die Erfindung eignet sich grundsätzlich für Kugelhähne mit beliebigen Durchmessern. Eine besondere Eignung ergibt sich jedoch für Großkugelhähne mit einem Durchmesser, der mindestens 14 Zoll (DN 350 mm), bevorzugt mindestens 40 Zoll (DN 1000 mm), besonders bevorzugt 42 (DN 1050 mm) bis 60 Zoll (DN 1500 mm), beträgt.

Bei dem erfindungsgemäßen Verfahren zum Verstellen eines Kugelhahns ist vorgesehen, dass der Kugelhahn in ein Leitungssystem zur Förderung von flüssigen oder gasförmigen Medien integriert und zum Öffnen und Schließen von Rohrleitungen verstellt wird, wonach zum Verstellen des Kugelhahns ein durch ein Medium, insbesondere ein Hydraulikmedium, erzeugter Druck, der an einer von einem Kugelküken abgewandten Rückseite wenigstens eines der Sitzringe anliegt, derart veränderbar ist, dass der Druck, der auf die Rückseite einwirkt, auf einen Druck unterhalb des Drucks in den Rohrleitungen reduziert wird. Um dies zu erreichen, kann das erfindungsgemäße Hydrauliksystem verwendet werden, um, vorzugsweise über Hydraulikkanäle, Druck aus dem Ringraum abzulassen und nach dem Verstellen des Kugelhahns den Druck wieder zu erhöhen, vorzugsweise eine Bypassleitung zu öffnen, um den Ringraum wieder an den Druck anzuschließen, der im Leitungssystem herrscht, beispielsweise dadurch, dass eine Verbindung mit einem Totraum hergestellt wird.

Alternativ kann zum Verstellen eines Kugelhahns auch vorgesehen sein, dass das Drucksystem bzw. das Hydrauliksystem derart ausgebildet ist, dass dieses den Druck im Totraum erhöht, wodurch der oder die Sitzringe mit einer Kraft belastet werden, welche diese von der Anlage an dem Kugelküken abhebt bzw. abheben möchte. Möglich ist auch eine Kombination beider Maßnahmen, d. h. eine Reduzierung des Drucks im Ringraum und eine Erhöhung des Drucks im Totraum.

Von Vorteil ist es, wenn das Verfahren zum Verstellen eines Kugelhahns ermöglicht, dass der Sitzring nicht oder nur mit leichtem Druck an dem Kugelküken anliegt, wenn das Kugelküken verstellt wird.

Vorzugsweise wird zum Verstellen des Kugelhahns ein Betriebsmodus gewählt, bei dem der Druck im Totraum dem Druck in den Rohrleitungen bzw. dem Druck im Leitungssystem entspricht und im Drucksystem bzw. Hydrauliksystem lediglich der Atmosphärendruck herrscht.

Bei dem erfindungsgemäßen Verfahren zum Durchführen wenigstens eines Molchs durch einen in ein Leitungssystem für flüssige oder gasförmige Medien eingesetzten Kugelhahn, welcher über ein Kugelküken und Sitzringe verfügt bzw. diese aufweist, ist vorgesehen, dass ein oder mehrere Molche durch einen Leitungsabschnitt, in den der Kugelhahn eingesetzt ist, durchgeführt werden. Dabei soll wenigstens einer der Sitzringe des Kugelhahns durch einen von einem Drucksystem, insbesondere einem Hydrauliksystem, erzeugten und steuerbaren Druck, insbesondere einem Hydraulikdruck, an das Kugelküken gedrückt werden. Das Drucksystem, insbesondere das Hydrauliksystem, ist dabei eingerichtet, um den Druck, insbesondere den Hydraulikdruck, unabhängig vom Druck in den Rohrleitungen zu erzeugen.

Das erfindungsgemäß vorgesehene Verfahren zum Durchführen wenigstens eines Molchs eignet sich insbesondere um den Kugelhahn bzw. das Leitungssystem, vorzugsweise vor der Inbetriebnahme zu reinigen.

Das erfindungsgemäße Verfahren zum Durchführen wenigstens eines Molchs kann Teil eines Verfahrens zum Reinigen sein.

Erfindungsgemäß kann vorgesehen sein, dass das Drucksystem einen Druck erzeugt, der ausreichend ist, um wenigstens einen der Sitzringe, vorzugsweise beide Sitzringe, an das Kugelküken anzudrücken und in Kontakt mit dem Kugelküken zu halten, während der Molch oder die Molche durch das Kugelküken geführt wird bzw. werden.

In einer Weiterbildung der Erfindung kann vorgesehen sein, dass nach dem Durchführen des Molchs oder der Molche durch das Kugelküken der von dem Drucksystem erzeugte Druck, der wenigstens einen der Sitzringe an das Kugelküken andrückt, so weit reduziert wird, dass der wenigstens eine Sitzring von dem Kugelküken abhebt.

Eine Ausgestaltung des Verfahrens derart, dass nach dem Durchführen des Molchs oder der Molche einer oder beide Sitzringe von dem Kugelküken abheben, ermöglicht es Verunreinigungen, die durch das Molchen eventuell in Kontakt mit dem Sitzring bzw. dem Dichtsystem oder den Dichtflächen des Sitzringes gekommen sind, auszuspülen bzw. auszublasen, so dass die Verunreinigungen beim späteren Betätigen des Kugelkükens das Dichtsystem bzw. die Dichtflächen zwischen dem Kugelküken und dem Sitzring nicht beschädigen.

Ein Anheben wenigstens eines Sitzrings lässt sich, wie grundsätzlich bereits beschrieben, durch verschiedene Maßnahmen erreichen. Vorzugsweise wird der Druck des Drucksystems, mit dem der Sitzring an das Kugelküken angedrückt wird, reduziert. Dies kann zum Beispiel dadurch erfolgen, dass der Ringraum mit einem geringeren Druck beaufschlagt wird. Ferner kann alternativ oder ergänzend vorgesehen sein, dass das Drucksystem derart ausgebildet ist, dass dieses einen Druck in den Totraum einleitet, so dass der Sitzring oder die Sitzringe von dem Kugelküken abgehoben werden.

Das erfindungsgemäße Hydrauliksystem kann regelbar bzw. steuerbar zu- und abschaltbar sein.

Die erfindungsgemäße Lösung eignet sich auch als Notfallsystem. Zeigt nach längeren Betriebszeiten die Hauptdichtung im Sitzring eines Kugelhahnes Verschleiß oder aufgrund von Verschmutzung leichte Beschädigungen und dadurch Leckagen, so kann mit der erfindungsgemäßen Lösung die Kraft auf den Sitzring erhöht werden und dadurch eine Notabdichtung bei geschlossenen Kugelküken erreicht werden. Diese erhöhten Anpresskräfte sollten für den Zeitraum der Notfallmaßnahme erhalten bleiben. Eine Schaltung des Kugelkükens ist dabei nicht vorgesehen.

Bei dem erfindungsgemäßen Verfahren (nach Anspruch 13) zum Reinigen eines Kugelhahns ist vorgesehen, dass der Kugelhahn in ein Leitungssystem zur Förderung von flüssigen oder gasförmigen Medien integriert ist und zum Öffnen und Schließen von Rohrleitungen verstellt wird. Vorgesehen ist dabei, dass der Kugelhahn ein Kugelküken und Sitzringe aufweist. Das erfindungsgemäße Verfahren zum Reinigen sieht ein Drucksystem vor, welches ausgebildet ist, um unabhängig vom Druck in den Rohrleitungen einen Druck zu erzeugen, welcher wenigstens einem der Sitzringe derart zugeführt wird, dass der wenigstens eine Sitzring mit einer den Sitzring von der Anlagefläche an dem Kugelküken wegdrückenden Kraft beaufschlagt wird.

Das erfindungsgemäße Verfahren zum Reinigen ermöglicht es, Verunreinigungen, die eventuell in den Bereich bzw. das Dichtsystem bzw. die Dichtflächen zwischen einem der Sitzringe und dem Kugelküken gelangt sind, zu entfernen, insbesondere auszuspülen oder auszublasen, insbesondere bevor das Kugelküken zum Öffnen und Schließen von Rohrleitungen verstellt wird. Durch das Abheben des Sitzrings von dem Kugelküken lassen sich die Verunreinigungen entfernen, bevor diese durch den Verstellvorgang des Kugelkükens das Dichtsystem bzw. die Dichtflächen beschädigen können. Ein derartiges Verfahren eignet sich insbesondere auch zum Entfernen von Verunreinigungen nach dem Molchen, kann jedoch auch hiervon unabhängig eingesetzt werden. Der Betriebsmodus nach diesem Verfahren kann bei jedem Verstellvorgang oder nach einer bestimmten Anzahl von Verstellvorgängen oder zeitabhängig oder nach dem Molchen oder nach einem anderen Rhythmus, vorzugsweise vor Einleitung eines Verstellvorgangs, durchgeführt werden.

Bei dem Verfahren zum Reinigen eines Kugelhahns kann vorgesehen sein, dass der von dem Drucksystem erzeugte Druck gleich groß oder größer ist als der Druck in den Rohrleitungen.

Vorzugsweise leitet das Drucksystem den Druck in einen Totraum ein, derart, dass der Sitzring mit einer Kraft beaufschlagt wird, welche diesen von dem Kugelküken wegdrückt bzw. wegdrücken möchte. Vorzugsweise ist der Druck im Totraum höher als der Druck in den Rohrleitungen bzw. im Leitungssystem. In den Zuleitungen des Drucksystems zu dem Ringraum kann in diesem Betriebsmodus vorzugsweise ein Atmosphärendruck herrschen.

Insofern in den Rohrleitungen lediglich der Atmosphärendruck herrscht, kann bereits ein Druck von wenigen Bar im Totraum ausreichend sein, um den oder die Sitzringe von dem Kugelküken abzuheben. Es genügt in diesem Fall, wenn der Druck ein Niveau aufweist, das ausreichend ist, um die Sitzringe gegebenenfalls gegen die Kraft einer Feder von dem Kugelküken abzuheben. Durch das Abheben des oder der Sitzringe von dem Kugelküken strömt Gas oder Fluid von dem Totraum in die Rohrleitungen, wodurch Verunreinigungen, Ablagerungen oder Verschmutzungen ausgeblasen bzw. ausgespült werden. Vorzugsweise herrscht in diesem Betriebsmodus in den Zuleitungen des Drucksystems zu dem Ringraum ein Atmosphärendruck.

Insofern in den Rohrleitungen ein Druck anliegt, der höher ist als der Amtosphärendruck, insbesondere ein sogenannter Pipelinedruck, kann vorgesehen sein, dass der Druck, den das Drucksystem im Totraum anlegt, entsprechend höher ist bzw. derart gewählt ist, dass der oder die Sitzringe von dem Kugelküken trotzdem abgehoben werden können und sich - wie beschrieben - ein Ausblasen oder Ausspülen von Verunreinigungen ergibt. Auch in diesem Fall ist es von Vorteil, wenn in den Zuleitungen des Drucksystems zu dem Ringraum ein Atmosphärendruck herrscht.

Ein Abheben des Sitzrings von dem Kugelküken kann auch auf andere Art und Weise, wie vorstehend bereits beschrieben, erreicht werden.

Bei dem erfindungsgemäßen Verfahren (nach Anspruch 15) zum Abdichten eines Kugelhahns ist vorgesehen, dass der Kugelhahn in ein Leitungssystem zur Förderung von flüssigen oder gasförmigen Medien integriert und zum Öffnen und Schließen von Rohrleitungen verstellt wird. Dabei ist vorgesehen, dass der Kugelhahn ein Kugelküken und Sitzringe aufweist. Erfindungsgemäß ist ferner ein Drucksystem vorgesehen, welches ausgebildet ist, um unabhängig vom Druck in den Rohrleitungen einen Druck zu erzeugen, welcher wenigstens einem der Sitzringe derart zugeführt wird, dass der wenigstens eine Sitzring derart an das Kugelküken angepresst wird, dass eine Anlagefläche zwischen dem Kugelküken und dem Sitzring abgedichtet wird, selbst wenn das Dichtsystem bzw. eine Dichtfläche des wenigstens einen Sitzrings beschädigt ist.

Durch das erfindungsgemäße Verfahren zum Abdichten eines Kugelhahns wird insbesondere ein Notfallsystem bereitgestellt bzw. ein Betriebsmodus für eine Notfallabdichtung, in der wenigstens einer, vorzugsweise beide Sitzringe an das Kugelküken angepresst werden. Zur Notabdichtung ist es aus dem Stand der Technik bekannt, dass durch entsprechend geeignete Bohrungen im Sitzring ein viskoses bzw. sekundäres Dichtmittel eingebracht wird, welches dann eine Notfalldichtfunktion erfüllen soll, eine Steuerung des Kugelkükens ist dann jedoch nicht mehr möglich. Das erfindungsgemäße Drucksystem bietet hier eine kostengünstige, sichere und zuverlässige Möglichkeit, ein alternatives Notfallsystem, ohne dass ein viskoses bzw. sekundäres Dichtmittel notwendig ist, bereitzustellen.

Die vorstehend beschriebenen vorteilhaften Ausführungsformen des Kugelhahns eignen sich auch für die erfindungsgemäßen Verfahren zum Verstellen bzw. zum Reinigen bzw. zum Abdichten bzw. zum Molchen eines in einem Leitungssystem eingesetzten Kugelhahns.

Der erfindungsgemäße Kugelhahn bzw. die beschriebenen erfindungsgemäßen Verfahren können alle mit demselben Drucksystem realisiert werden. Die bezüglich des erfindungsgemäßen Kugelhahns und der erfindungsgemäßen Verfahren beschriebenen Merkmale, Varianten und Ausführungsformen, inklusive der Ausführungsbeispiele, die nachfolgend anhand der Zeichnung beschrieben werden, können beliebig miteinander kombiniert werden.

Ein besonderer Vorteil der vorliegenden Erfindung besteht darin, dass das erfindungsgemäße Drucksystem mit unterschiedlichen Betriebsmodi betrieben werden kann. Dabei eignet sich das erfindungsgemäße Drucksystem sowohl für "Single-Piston"-Systeme als auch für "Double-Piston"-Systeme. Vier besonders vorteilhafte Betriebsmodi sind nachfolgend als "Schaltzustand (Sitzringe abgehoben)"; "Notabdichtung"; "Molchbetrieb" und "Ausblasen" nochmals kurz dargestellt.

Vorzugsweise ist eine Steuer- und/oder Regeleinrichtung vorgesehen, die es ermöglicht, das Drucksystem in geeigneter Weise zu steuern, so dass mehrere, vorzugsweise alle, Betriebsmodi dargestellt werden können.

Im "Schaltzustand (Sitzringe abgehoben)" ist vorzugsweise vorgesehen, dass im Totraum der Druck herrscht, der in den Rohrleitungen anliegt bzw. der Druck im Leitungssystem. Das Drucksystem kann dabei vorzugsweise Atmosphärendruck aufweisen.

Im Betriebsmodus "Notfallabdichtung" ist vorzugsweise vorgesehen, dass die Sitzringe mit hoher Kraft an das Kugelküken angepresst werden. Hierzu wird in einem Druck- bzw. Hydraulickanal, der in den Ringraum mündet, ein Druck angelegt, der deutlich höher ist als der Druck im Totraum.

In dem Betriebsmodus "Molchbetrieb" ist ähnlich wie im Betriebsmodus "Notfallabdichtung" vorgesehen, dass das Drucksystem einen hohen Druck erzeugt, um den Sitzring an das Kugelküken anzupressen. Die Ausführung kann dabei identisch sein, wobei, im Unterschied zur "Notfallabdichtung", bei der in den Rohrleitungen im Regelfall ein Druck über dem Atmosphärendruck, nämlich der sogenannte "Pipelinedruck", anliegt, in den Rohrleitungen im Betriebsmodus "Molchbetrieb" nur der Atmosphärendruck anliegt, um ein Molchen zu ermöglichen.

Im Betriebsmodus "Ausblasen" kann vorgesehen sein, dass der Druck im Totraum höher ist als der Druck in den Rohrleitungen, während das Drucksystem, zumindest der Teil des Drucksystems, der in den Ringraum mündet, vorzugsweise Atmosphärendruck aufweist. Hier sind, wie vorstehend bereits dargestellt, jedoch auch andere Varianten denkbar, um ein Abheben des Sitzrings zu ermöglichen.

Vorzugsweise kann vorgesehen sein, dass in allen Betriebsmodi bei jedem Schaltvorgang eine Reinigung zwischen Kugelküken und den Sitzringen durchgeführt wird, insbesondere ein Ausblasen oder Ausspülen erfolgt.

Nachfolgend ist ein Ausführungsbeispiel der Erfindung prinzipmäßig dargestellt.

Es zeigt:
- Fig. 1: eine Seitenansicht auf einen erfindungsgemäßen Kugelhahn, welcher in eine Rohrleitung eines Leitungssystems eingesetzt ist;
- Fig. 2: eine prinzipmäßige Darstellung eines Schnitts durch einen Kugelhahn in einer typischen Bauweise als "Double Piston"-Kugelhahn ohne eine Darstellung des erfindungsgemäßen Hydrauliksystems;
- Fig. 3: einen Schnitt durch einen Kugelhahn in einer ersten Ausführungsform mit einer Dicht- und Anpresseinrichtung in einem Bereich, in dem ein Sitzring abdichtend an einem Kugelküken anliegt;
- Fig. 4: einen Schnitt durch einen Kugelhahn in einer zweiten, bevorzugten Ausführungsform in einem Bereich, in dem ein Sitzring abdichtend an einem Kugelküken anliegt; und
- Fig. 5: eine prinzipmäßige Darstellung eines Schaltplans der erfindungsgemäßen hydraulischen Anpressung des Sitzrings an das Kugelküken.

Kugelküken sind aus dem allgemeinen Stand der Technik hinlänglich bekannt, und zwar sowohl hinsichtlich ihres konstruktiven Aufbaus als auch hinsichtlich ihrer Funktionsweise zum Öffnen und Schließen von Rohrleitungen. Bekannt sind zudem unterschiedliche Kugelhahndichtsysteme, weshalb nachfolgend nur auf die erfindungswesentlichen Merkmale näher eingegangen wird.

Im Ausführungsbeispiel ist vorgesehen, dass der Kugelhahn 1 unterirdisch eingebaut ist, dies ist jedoch optional.

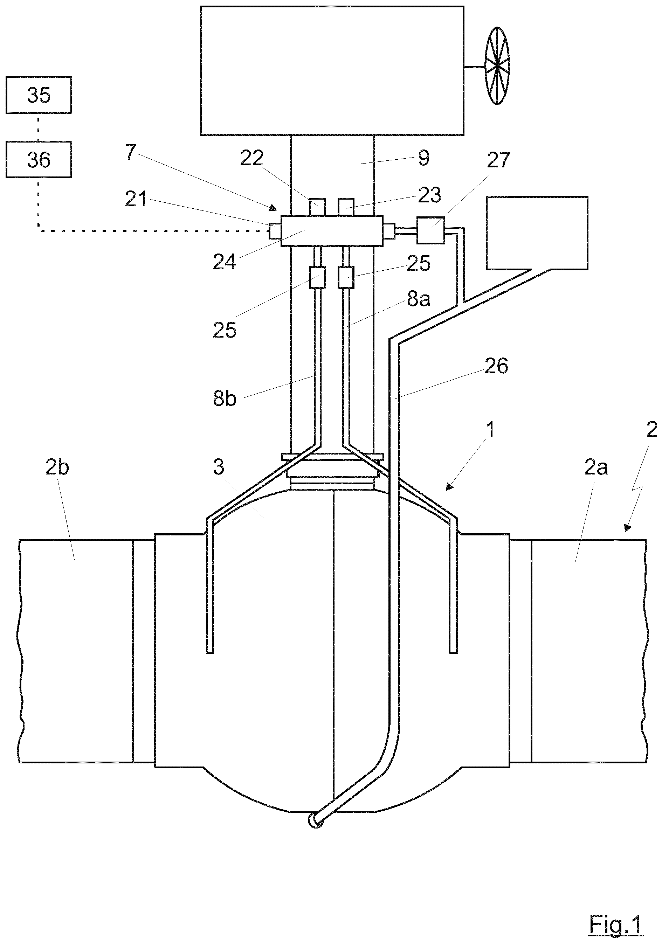

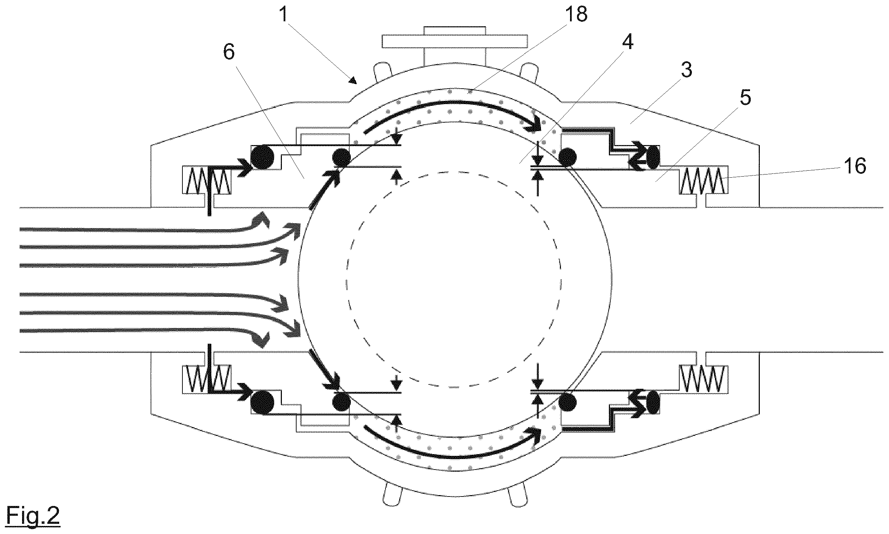

Die Figuren 1 und 2 zeigen prinzipmäßig einen Kugelhahn 1, der in ein durch zwei Rohrleitungsstücke 2a, 2b dargestelltes Leitungssystem 2 eingesetzt ist. Das Leitungssystem 2 kann zur Förderung von flüssigen oder gasförmigen Medien dienen. Im Ausführungsbeispiel ist vorgesehen, dass durch das Leitungssystem 2 ein gasförmiges Medium transportiert wird. Hierauf ist das Ausführungsbeispiel jedoch nicht beschränkt.

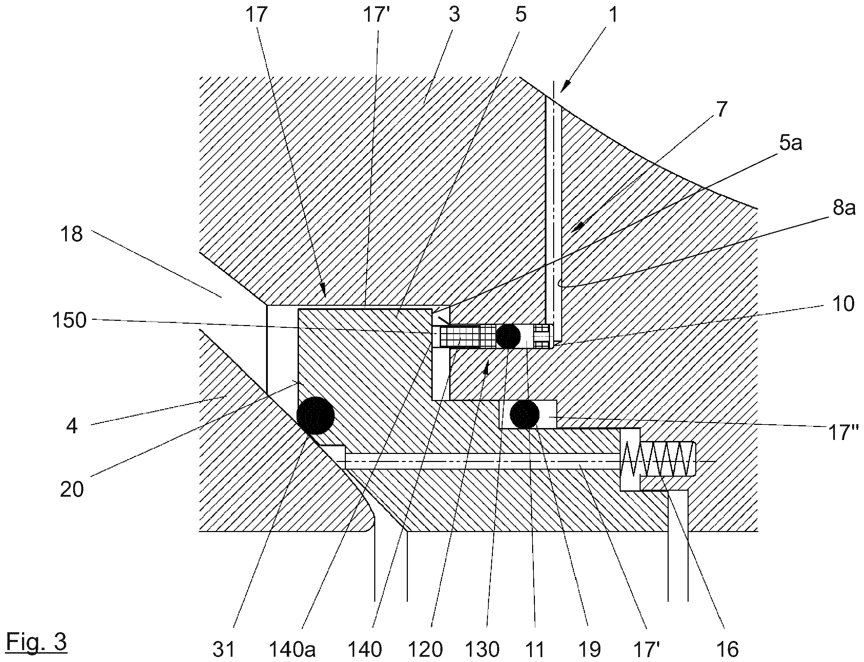

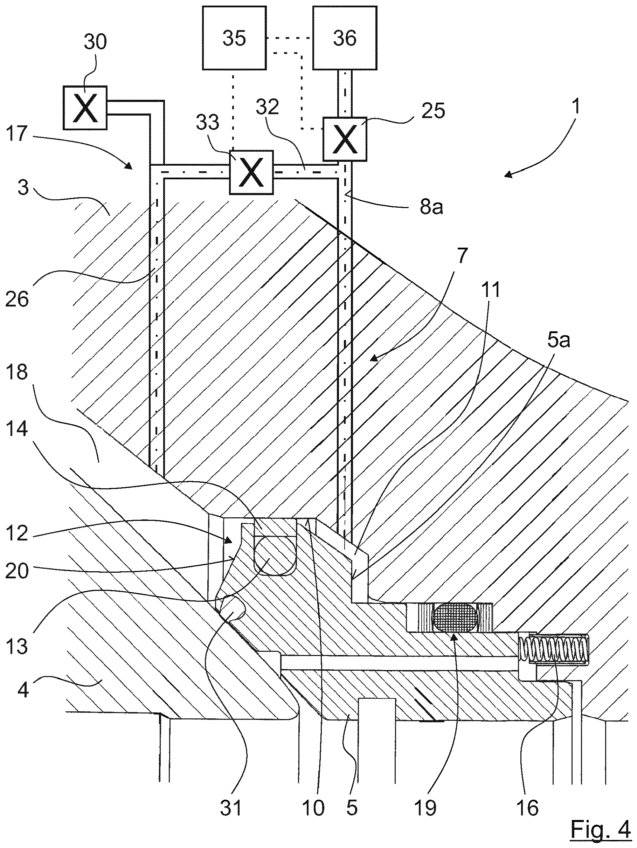

Der erfindungsgemäße Kugelhahn 1 weist ein Gehäuse 3 auf, welches ein Kugelküken 4 und zwei Sitzringe 5, 6 aufnimmt. Lediglich zur Verdeutlichung des bekannten Funktionsprinzips ist in Fig. 2 ein Schnitt durch einen Kugelhahn dargestellt, aus dem sich das Gehäuse 3, das Kugelküken 4 und die beiden Sitzringe 5, 6 ergeben. Dargestellt ist dies ausschnittsweise auch in den Figuren 3 und 4.

Im Ausführungsbeispiel befindet sich der Sitzring 5 stromabwärts des Sitzrings 6, d. h. das durch das Leitungssystem 2 strömende Medium gelangt zuerst zu dem Sitzring 6 und dann zu dem Sitzring 5. Dies ist in Fig. 2 durch die Strömungspfeile dargestellt.

Das Kugelküken 4 wird durch eine Betätigungseinrichtung 9 (siehe Fig. 1) betätigt, d. h. das Kugelküken 4 kann verdreht werden, um das Leitungssystem 2 zu öffnen oder zu schließen.

Fig. 1 zeigt eine Prinzipdarstellung des erfindungsgemäßen Hydrauliksystems 7, auf das die Erfindung und die Ausführungsbeispiele nicht beschränkt sind. Im Ausführungsbeispiel ist vorgesehen, dass das Hydrauliksystem 7 beide Sitzringe 5, 6 bei Bedarf unabhängig von dem durch das Leitungssystem 2 strömenden flüssigen oder gasförmigen Medium hydraulisch an das Kugelküken 4 drücken kann.

Das Hydrauliksystem 7 umfasst Hydraulikkanäle 8a, 8b, die geeignet sind, ein Hydraulikmedium einer von dem Kugelküken 4 abgewandten Rückseite 5a, 6a der Sitzringe 5, 6 zuzuführen, um dort einen Hydraulikdruck aufzubauen.

In den Figuren 3 und 4 ist von dem Hydraulikkanal 8a im Wesentlichen nur ein Teilstück zu erkennen, nämlich das Teilstück, das sich als Bohrung durch das Gehäuse 3 bis zu der Rückseite 5a des Sitzrings 5 erstreckt.

Fig. 3 zeigt nun eine mögliche erste Ausführungsform der Erfindung, die gegebenenfalls unabhängig, aber auch ergänzend zu der nachfolgenden in Fig. 4 beschriebenen bevorzugten Ausführungsform eingesetzt werden kann.

Soweit dies nicht anderweitig dargestellt ist, können einzelne Merkmale, die bezüglich eines der beiden Ausführungsbeispiele beschrieben wurden, auch bei dem anderen Ausführungsbeispiel eingesetzt werden.

Wie aus Fig. 3 zu erkennen ist, ist zwischen der Rückseite 5a des Sitzrings 5 und einer angrenzenden, dem Sitzring 5 zugewandten Innenwandfläche 10 des Gehäuses 3 ein ringförmig umlaufender Ringraum 11 ausgebildet, mit dem der das Hydraulikmedium zuführende Hydraulickanal 8a korrespondiert. In dem Ringraum 11 ist eine ringförmig ausgebildete Dicht- und Anpresseinrichtung 120 eingesetzt. Die Dicht- und Anpresseinrichtung 120 weist im Ausführungsbeispiel einen O-Ring 130 und einen Anpressring 140 auf. Der O-Ring 130 ist an der von dem Sitzring 5 abgewandten Rückseite des Anpressrings 140 angeordnet ist. Die dem Sitzring 5 zugewandte Vorderseite 140a des Anpressrings 140 weist Einkerbungen, Nuten 150 oder Kanäle derart auf, dass zwischen der Vorderseite 140a des Anpressrings 140 und dem Sitzring 5 ein flüssiges oder gasförmiges Medium durchströmen bzw. unterhalb der Vorderseite 140a eindringen kann.

Wie sich ferner aus Fig. 3 und grundsätzlich auch aus der Fig. 2 ergibt, weist der Sitzring 5 eine Federeinrichtung 16 auf, um den Sitzring 5 gegen das Kugelküken 4 zu drücken. Die Federeinrichtung 16 kann dabei beispielsweise eine Kraft aufbringen, die den Sitzring 5 mit einer Kraft gegen das Kugelküken 4 drückt, die einer Gewichtskraft von 2 bis 2,5 Tonnen entspricht.

Das Gehäuse 3 und die Sitzringe 5, 6 weisen im Ausführungsbeispiel gemäß Fig. 3 ein Differenzdruckkanalsystem 17 auf, um die Sitzringe 5, 6 in Abhängigkeit des durch das Leitungssystem 2 strömenden flüssigen oder gasförmigen Mediums an das Kugelküken 4 zu drücken. Der genaue Verlauf des Differenzdruckkanalsystems 17 ist hierfür nicht weiter relevant. Durch das Differenzdruckkanalsystem 17 kann erreicht werden, dass, wenn ein Druck im Leitungssystem 2 herrscht, dieser an der Rückseite 5a, 6a der Sitzringe 5, 6 anliegt, wobei die Rückseite 5a, 6a der Sitzringe 5, 6 eine größere Fläche zur Anlage des Drucks aufweist als die Vorderseite 20 der Sitzringe 5, 6, so dass die Sitzringe 5, 6 bei steigendem Druck immer stärker an das Kugelküken 4 angedrückt werden. Im Grundsatz ist dies auch der Fig. 2 zu entnehmen.

Aus der Fig. 2 lässt sich das Prinzip des "Double Piston"-Systems entnehmen. Dort (wie auch in Fig. 3 und Fig. 4 ausschnittsweise) ist auch ein bei Kugelhähnen üblicher Totraum 18 dargestellt.

Im Ausführungsbeispiel nach Fig. 3 gelangt, bei normalem Betrieb des Leitungssystems 2, d. h. wenn Druck im Leitungssystem 2 anliegt, durch den Totraum 18 unter Druck stehendes Gas auch an den Sitzring 5. Durch einen ersten Differenzdruckkanal 17' gelangt das unter Druck stehende Gas zu dem Anpressring 140 und verschiebt diesen in eine sich von dem Sitzring 5 entfernende Richtung. Dadurch strömt das unter Druck stehende Gas weiter und gelangt in der Folge in einen Ringraum 17", der Teil des Differenzdruckkanalsystems 17 ist. In dem Ringraum 17" kann in bekannter Weise ein Abdichtelement 19 angeordnet sein. Das Abdichtelement 19 ist in dem Ringraum 17" in axialer Richtung beweglich. Durch das unter Druck stehende Gas wird das Abdichtelement 19 in eine sich von dem Sitzring 5 entfernende Richtung verschoben. Dadurch werden an der Rückseite 5a des Sitzrings 5 große Flächen zur Verfügung gestellt, an denen das unter Druck stehende Gas anliegt. Der Sitzring 5 wird somit entgegen der an der Vorderseite 20 des Sitzrings 5 wirkenden Druckkraft an das Kugelküken 4 gepresst.

Dieses Grundkonzept ist aus dem Stand der Technik bereits bekannt, wozu auch auf die Fig. 2 verwiesen wird, welche die Strömungsrichtung eines Gases bezogen auf das in Fig. 3 dargestellte Ausführungsbeispiel zeigt. Im Rahmen des Ausführungsbeispiels nach Fig. 3 kommt es auf die konkrete Gestaltung des Differenzdruckkanalsystems 17 nicht an, gleichwohl hat sich die dargestellte Ausgestaltung als vorteilhaft in Verbindung mit der dort dargestellten Dicht- und Anpresseinrichtung 10 herausgestellt.

In der Ausführungsform nach Fig. 4 ist ebenfalls - optional - ein Differenzdruckkanalsystem dargestellt, welches jedoch anders als in den Figuren 2 und 3 umgesetzt ist, jedoch dieselbe Funktion erfüllt.

Fig. 1 zeigt das Hydrauliksystem 7, das einen Anschluss 21 zum Anschließen einer Hydraulikeinheit 36 aufweisen kann. Bei der Hydraulikeinheit 36 kann es sich beispielsweise um eine Pumpe handeln, mit der der Hydraulikdruck der auf den Sitzring 5 und/oder den Sitzring 6 wirkt, verändert bzw. erzeugt oder reduziert werden kann. Ferner zeigt die Fig. 1, dass das Hydrauliksystem 7 ein Manometer 22 und/oder ein Druckbegrenzungsventil 23 aufweisen kann. Das Druckbegrenzungsventil 23 kann vorzugsweise auf eine Druckbegrenzung in Höhe von 40 bar, vorzugsweise 50 bar, eingestellt sein. Ferner kann das Hydrauliksystem 7 einen Verteilerblock 24 aufweisen. Im Ausführungsbeispiel wird das Hydrauliksystem 7 von nur einer, lediglich prinzipmäßig dargestellten, Hydraulikeinheit 36, die an dem Anschluss 21 angeschlossen werden kann, gespeist. Über den Verteilerblock 24 gelangt das Hydraulikmedium dann in die Hydraulikkanäle 8a, 8b, wobei für jeden Hydraulikkanal 8a, 8b ein eigenes Absperrelement, zum Beispiel ein Absperrhahn 25, vorgesehen sein kann. Die Absperrhähne 25 können vorzugsweise als Kugelhähne ausgebildet sein.

Die Hydraulikkanäle 8a, 8b können eine (nicht dargestellte) Drosselstelle aufweisen, die vorzugsweise im Übergangsbereich zu dem Ringraum 11 positioniert ist.

In nicht näher dargestellter Weise können die beiden Sitzringe 5, 6 auch von einem gemeinsamen Hydraulikkanal gegebenenfalls unter Entfall eines Verteilerblocks mit dem Hydraulikmedium versorgt werden.

Wie aus Fig. 1 ferner erkennbar ist, verfügt der Kugelhahn 4 über eine nur beispielhaft dargestellte Totraumentlüftungsleitung 26, die zur Entlüftung des Totraums 18 dient. Die Totraumentlüftungsleitung 26 kann mit dem Hydrauliksystem 7 über eine Zweigleitung verbunden sein. Die Zweigleitung kann dabei gegebenenfalls über ein Absperrelement 27 verfügen. Das Absperrelement 27 kann beispielsweise über ein Druckbegrenzungsventil und/oder einen Bypasshahn verfügen.

Die Totraumentlüftungsleitung 26 ist für die Erfindung nicht wesentlich, aber vorteilhaft.

Wie aus Fig. 1 und auch aus der Fig. 4 erkennbar ist, kann eine Steuereinrichtung 35 zur Steuerung der Hydraulikeinheit 36 und/oder der Hydraulikkanäle 8a, 8b und/oder der Absperrelemente 25 und 33 (wie nachfolgend gemäß Fig. 4 näher dargestellt) vorgesehen sein. Die Steuereinrichtung 35 kann ein automatisiertes Schalten ermöglichen, bei dem der Druck im Ringraum 11 bei jedem Schaltvorgang entsprechend eingestellt wird. Die Steuereinrichtung 35 ist vorgesehen, um die Hydraulikkanäle 8a, 8b und/oder die Hydraulikeinheit 36 derart zu steuern, dass unabhängig von dem durch das Leitungssystem strömenden Medium ein Hydraulikdruck auf die Rückseite 5a, 6a wenigstens einer der Sitzringe 5, 6 aufbringbar ist. Die Steuereinrichtung 35 ist insbesondere derart ausgebildet, dass der Hydraulikdruck an der Rückseite 5a, 6a des Sitzrings 5, 6 auch auf einen Druck unterhalb des Drucks im Leitungssystem reduziert werden kann.

Nachfolgend wird ein besonders geeignetes Ausführungsbeispiel anhand der Fig. 4 dargestellt. Gemäß Fig. 4 ist keine Dicht- und Anpresseinrichtung 120 vorgesehen, wobei grundsätzlich eine Kombination mit dieser möglich wäre.

Gemäß Fig. 4 ist vorgesehen, dass ein Hydrauliksystem 7, welches vom Druck des durch das Leitungssystem strömenden flüssigen oder gasförmigen Mediums unabhängig ist, den Anpressdruck, mit dem der Sitzring 5, vorzugsweise beide Sitzringe 5, 6, auf das Kugelküken 4 drücken, verändert. Nachfolgend beschrieben wird dies anhand einer Veränderung des Drucks auf den Sitzring 5.

Der Druck, der auf den Sitzring 5 einwirkt, kann auf den Druck im Leitungssystem und/oder ein Druck, der höher ist als im Leitungssystem und/oder ein Druck, der geringer ist als im Leitungssystem, eingestellt werden. Hierzu kann die Steuereinrichtung 35 vorgesehen sein.

Das Hydrauliksystem 7 umfasst die bereits beschriebenen Hydraulikkanäle 8a, 8b, wobei in Fig. 4 nur der Hydraulikkanal 8a dargestellt ist, um ein Hydraulikmedium an die Rückseite 5a des Sitzrings 5 zu leiten oder von dort abzuleiten, um den Hydraulikdruck auf den Sitzring 5 zu verändern. Zwischen der Rückseite 5a des Sitzrings 5 und der an den Sitzring 5 angrenzenden Innenwandfläche 10 des Gehäuses 3 ist dabei ein grundsätzlich bekannter Ringraum 11 ausgebildet, der sich jedoch von dem Ringraum gemäß Fig. 3, wie nachfolgend dargestellt, unterscheidet. Der Ringraum 11 korrespondiert mit dem Hydraulikkanal 8a, welcher in den Ringraum 11 mündet.

Im Unterschied zu der Darstellung gemäß Fig. 3 ist bei dem Ringraum 11 nach Fig. 4 vorgesehen, dass dieser durch eine erste Abdichtung 12 und eine zweite Abdichtung 19 begrenzt ist, welche derart angeordnet sind, dass das von dem Hydraulikkanal 8 zugeführte Hydraulikmedium eine Hydraulikkraft erzeugt, die direkt auf die Rückseite 5a des Sitzrings 5 einwirkt.

Wie sich aus Fig. 4 ergibt, ist die erste Abdichtung 12 zwischen der Innenwandfläche 10 des Gehäuses 3 und dem Sitzring 5 angeordnet, um den Ringraum 11 zu dem Totraum 18 abzudichten. In dem Totraum 18 liegt im Normalbetrieb des Leitungssystems ein Druck an, der, wie bereits beschrieben, dem Druck in den Rohrleitungen 2a, 2b des Leitungssystems, durch welche das flüssige oder gasförmige Medium transportiert wird, entspricht.

Durch die in Figur 4 dargestellte Ausgestaltung wird ein Ringraum 11 geschaffen, in dem unabhängig vom Druck im Leitungssystem ein geeigneter bzw. gewünschter Druck eingestellt werden kann, der gleich groß, kleiner oder größer als der Druck im Leitungssystem sein kann, um verschiedene Funktionen zu erfüllen.

Insbesondere beim Molchen kann durch das Hydrauliksystem 7 in dem Ringraum 11 ein Druck eingestellt werden, der eine Größe aufweist, die sicherstellt, dass der Molch den Sitzring 5 nicht von dem Kugelküken 4 abhebt. Insbesondere beim Verstellen des Kugelhahns 1 kann in dem Ringraum 11 ein reduzierter Druck eingestellt werden, der ein einfaches Verstellen des Kugelkükens 4 ermöglicht und insbesondere eine übermäßige Belastung der Dichtung zwischen dem Sitzring 5 und dem Kugelküken 4 vermeidet.

Die Abdichtung 12 ist im Ausführungsbeispiel gemäß Figur 4 vorzugsweise als Kolbendichtung ausgebildet. Vorzugsweise weist die Abdichtung 12 einen O-Ring 13 und eine Gleitringdichtung 14 bzw. einen Gleitring auf, wobei der O-Ring 13 vorzugsweise an der von der Innenwandfläche 10 abgewandten Rückseite der Gleitringdichtung 14 angeordnet ist. Die Abdichtung ist vorzugsweise wenigstens teilweise in einer Ringnut des Sitzringes 5 angeordnet.

Im Ausführungsbeispiel nach Fig. 4 ist vorzugsweise vorgesehen, dass das Hydrauliksystem 7 eine beispielhaft dargestellte Bypassleitung 32 aufweist, um einen Druckausgleich zwischen dem Ringraum 11 und dem Totraum 18 herzustellen. Das Hydrauliksystem 7 weist dabei vorzugsweise ein ebenfalls nur beispielhaft dargestelltes Absperrelement 33, beispielweise einen Absperrhahn, einen Kugelhahn oder ein Ventil auf, um die Bypassleitung 32 zu öffnen oder zu schließen, d.h. um den Ringraum 11 mit dem Totraum 18 zu verbinden oder hiervon abzuriegeln.

Durch die Bypassleitung 32 ist es möglich, dass im Normalbetrieb, d.h. wenn flüssiges oder gasförmiges Medium durch die Rohrleitungen 2, 3 transportiert wird, das grundsätzlich bereits beschriebene Differenzkanaldrucksystem 17 auch bei dem erfindungsgemäßen Kugelhahn 1 gemäß Figur 4 angewendet werden kann. Hierzu kann auch ein in Fig. 4 nur prinzipmäßig dargestelltes Absperrelement 25 vorgesehen sein, welches geschlossen werden kann, so dass die Hydraulikeinrichtung 36 nicht oder nur bei Bedarf zugeschaltet bzw. mit dem Hydraulikkanal 8a verbunden wird. Die Anordnung der Absperrelemente 25, 33 in den Leitungen ist nur exemplarisch. Die Positionierung kann beliebig derart erfolgen, dass die gewünschte Steuerung möglich ist. Hierfür können auch mehr oder weniger Absperrelemente 25, 33 vorgesehen sein. Alternativ oder ergänzend ist auch ein Verteilerblock einsetzbar, um den Hydraulikfluss in der gewünschten Weise zu steuern. Bei einem Schließen des Absperrelements 33 und einem entsprechenden Öffnen des Absperrelementes 25 kann, vorzugsweise mit Hilfe der Steuereinrichtung 35 die Hydraulikeinrichtung 36 derart gesteuert werden, dass ein gewünschter, vom Druck im Leitungssystem unabhängiger Druck im Ringraum 11 eingestellt werden kann.

Von Vorteil ist es, wenn bei einem Verfahren zum Verstellen eines Kugelhahns der Kugelhahn 1 in bekannter Weise in ein Leitungssystem zur Förderung von flüssigen oder gasförmigen Medien integriert ist. Entsprechend dem erfindungsgemäßen Verfahren kann zum Öffnen und Schließen von Rohrleitungen 2a, 2b, d. h. wenn der Kugelhahn 1 bzw. dessen Kugelküken 4 verstellt werden soll, ein durch ein Hydraulikmedium erzeugter Druck, der an einer von einem Kugelküken 4 abgewandten Rückseite 5a wenigstens eines der Sitzringe 5 anliegt, derart verändert werden, dass der Druck, der auf die Rückseite 5a des Sitzringes 5 einwirkt, auf einen Druck unterhalb des Drucks in den Rohrleitungen 2a, 2b reduziert wird.

Dadurch, dass der Druck im Ringraum 11 reduziert wird, wirkt dem an der Vorderseite 20 des Sitzrings 5 anliegendem Druck ein geringer bzw. geringer werdender Druck entgegen, wodurch die Dichtung zwischen dem Sitzring 5 und dem Kugelküken 4 entlastet wird. Durch eine entsprechende Reduzierung des Drucks im Ringraum 11 kann auch erreicht werden, dass der Sitzring 5 von dem Kugelküken 4 abgehoben wird bzw. sich zurückzieht.

Es kann ein mechanischer Anschlag (nicht näher in Fig. 4 bezeichnet) vorgesehen sein, um ein Abheben des Sitzrings 5 zu begrenzen.

Zur Entlüftung des Ringraums 11 kann in nicht dargestellter Weise ein Magnetventil vorgesehen sein.

Die zweite Abdichtung 19 kann beliebig, zum Beispiel als O-Ring oder, wie in Figur 4 dargestellt, auch mehrteilig vorzugsweise als Nutringdichtung, besonders bevorzugt als Doppelnutringdichtung, ausgebildet sein.

Im Ausführungsbeispiel kann vorgesehen sein, dass das Hydrauliksystem 7 ausgelegt ist um einen Hydraulikdruck zu erzeugen, derart, dass der jeweilige Sitzring 5, 6 mit einer Kraft, die einer Gewichtskraft von 5 bis 20 Tonnen, vorzugsweise 8 bis 10 Tonnen, entspricht, gegen das Kugelküken 4 gedrückt wird, wenn ein Molch durch das Kugelküken 4 durchgeführt wird. Die genaue Auslegung hängt dabei auch von der Dimensionierung des Kugelhahns 1 ab.

Bei einem Verfahren zum Durchführen eines Molchs durch das Leitungssystem bzw. die Rohrleitung 2a, 2b und den Kugelhahn 1 kann vorgesehen sein, dass ein oder mehrere Molche hintereinander durch den Leitungsabschnitt, in den der Kugelhahn 1 eingesetzt ist, durchgeführt werden. Es kann sich hierbei beispielsweise um ein Verfahren zum Reinigen des Leitungssystems bzw. des Kugelhahns 1 handeln. Hierzu können beispielsweise Reinigungsmolche eingesetzt werden. Dabei können die Sitzringe 5, 6 durch das vorbeschriebene Anlegen eines hydraulischen Drucks blockiert werden.

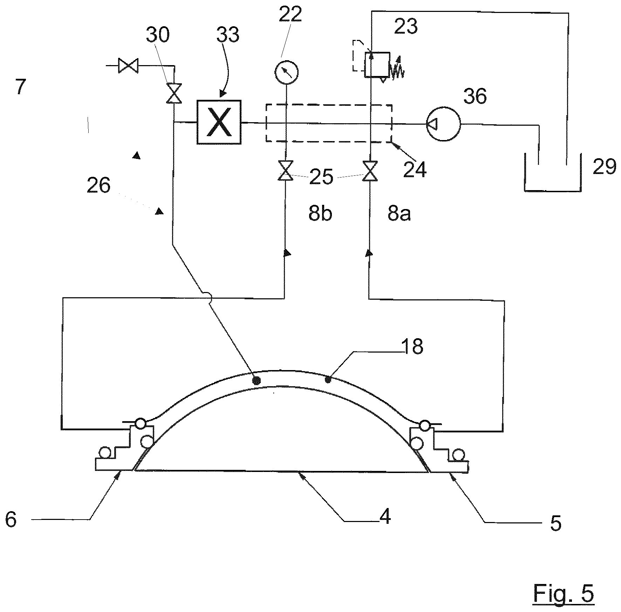

In Fig. 5 ist ein stark vereinfachter Schaltplan dargestellt, der nur beispielhaft zur Verdeutlichung dienen soll und weder die Erfindung noch die Ausführungsbeispiele beschränkt.

Wie sich aus Fig. 5 ergibt, kann mit Hilfe der Hydraulikeinheit 36, bei der es sich im Ausführungsbeispiel um eine Pumpe handeln kann, ein Hydraulikmedium dem Verteilerblock 24 zugeführt. Geregelt durch Absperrhähne 25 gelangt das Hydraulikmedium über die Hydraulikkanäle 8a, 8b an die Rückseite der Sitzringe 5, 6 bzw. wird den Sitzringen 5, 6 so zugeführt, dass die Sitzringe 5, 6 in Richtung auf das Kugelküken 4 hydraulisch belastet werden. Von dem Totraum 18 kann über die Totraumentlüftungsleitung 26 eine Entleerung des Hydraulikmediums erfolgen. Über eine Zweigleitung und das Absperrelement 33, welches z. B. aus einem Druckbegrenzungsventil und einem Bypasshahn bestehen kann, gelangt das Hydraulikmedium vorzugsweise zurück in den Verteilerblock 24 bzw. gegebenenfalls auch unter Umgehung desselben zu einem Tank 29. An dem Verteilerblock 24 kann ein in Fig. 1 dargestelltes Manometer 22 und ein Druckbegrenzungsventil 23 angeschlossen sein. Das Druckbegrenzungsventil 23 kann vorzugsweise auf einen Wert von 50 bar eingestellt werden.

Die Verwendung einer Totraumentlüftungsleitung 26 in Verbindung mit dem Absperrelement 33 und gegebenenfalls weiteren Kugelhähnen 30 ist für die Fig. 5 optional. Ferner kann gegebenenfalls auch auf einen Verteilerblock 24 mit dem Manometer 22 und dem Druckbegrenzungsventil 23 verzichtet werden.

In den Ausführungsbeispielen wurde die Erfindung im Wesentlichen anhand des Sitzrings 5 beschrieben, der Sitzring 6 kann identisch aufgebaut und angesteuert werden. Selbstverständlich kann auch nur die hydraulische Beaufschlagung eines Sitzrings 5 oder 6 durch das Hydrauliksystem 7 vorgesehen sein.

In den Ausführungsbeispielen ist vorgesehen, dass die Sitzringe 5, 6 zur Abdichtung gegenüber dem Kugelküken 4 eine Dichtfläche 31 aufweisen, die vorzugsweise durch eine Weichdichtung, besonders bevorzugt durch eine Elastomerdichtung, bereitgestellt wird. Die Sitzringe 5, 6 sind vorzugsweise aus Metall hergestellt.

Die in den Figuren, insbesondere in den Figuren 3 und 4, dargestellten Ausführungsbeispiele eignen sich auch zum Durchführen eines Verfahrens zum Reinigen eines Kugelhahns 1, bei dem vorgesehen ist, dass das Drucksystem 7 derart ausgebildet wird, dass der Druck unabhängig vom Druck in den Rohrleitungen 2a, 2b erzeugt und wenigstens einem der Sitzringe 5, 6 derart zugeführt wird, dass der wenigstens eine Sitzring 5, 6 mit einer den Sitzring 5, 6 von der Anlagefläche an dem Kugelküken 4 wegdrückenden Kraft beaufschlagt wird. Dies kann vorzugsweise dadurch erreicht werden, dass das Drucksystem 7 ausgebildet ist, um einen Druck in den Totraum 12 einzuleiten. Entsprechende Leitungen bzw. Kanäle, um Druck in den Totraum 12 einzuleiten, sind in Figur 3 nicht dargestellt, jedoch leicht vorstellbar. In der in Figur 4 dargestellten zweiten Ausführungsform kann hierzu beispielsweise vorgesehen sein, dass die Totraumentlüftungsleitung 26 oder eine nicht dargestellte zusätzliche Leitung entsprechend verwendet wird. Zur Unterstützung des Verfahrens kann zudem vorgesehen sein, dass der Druck im Ringraum 11 reduziert wird, wozu die Hydraulikkanäle 8a, 8b Verwendung finden können.

Bei dem Verfahren zum Reinigen kann vorgesehen sein, dass das Drucksystem 7 derart eingerichtet ist, dass der Druck, den das Drucksystem 7 im Totraum 18 erzeugt, gleich groß oder größer ist als der Druck in den Rohrleitungen 2a, 2b.

Das Verfahren zum Reinigen eines Kugelhahns 1 kann insbesondere auch nach dem Molchen eingesetzt werden.

Das erfindungsgemäße Verfahren zum Abdichten eines Kugelhahns 1 kann prinzipmäßig ebenfalls mit den in den Figuren, insbesondere den in den Figuren 3 und 4 dargestellten Ausführungsbeispielen realisiert werden. Das erfindungsgemäße Verfahren zum Abdichten sieht dabei vor, dass das Drucksystem 7 unabhängig vom Druck in den Rohrleitungen 2a, 2b einen Druck erzeugt, welcher wenigstens einem der Sitzringe 5, 6 derart zugeführt wird, dass der wenigstens eine Sitzring derart an das Kugelküken angepresst wird, dass eine Anlagefläche zwischen dem Kugelküken 4 und einem der Sitzringe 5, 6, vorzugsweise beiden Sitzringen 5, 6, abgedichtet wird, selbst wenn die Dichtfläche 31 bzw. allgemein das Dichtsystem des wenigstens einen Sitzrings 5, 6 beschädigt ist. Vorzugsweise erhöht das Drucksystem 7 dabei den Druck im Ringraum 11 entsprechend, wozu die Hydraulikkanäle 8a, 8b entsprechend Verwendung finden können.

## Patentansprüche

1. Kugelhahn für ein Leitungssystem zur Förderung von flüssigen oder gasförmigen Medien, mit einem Gehäuse, welches ein Kugelküken (4) und Sitzringe (5, 6) aufweist, wobei ein vom Druck des durch das Leitungssystem strömenden flüssigen oder gasförmigen Mediums unabhängiges Drucksystem (7), insbesondere ein Hydrauliksystem, vorgesehen ist, um den Anpressdruck wenigstens eines der Sitzringe (5,6) auf das Kugelküken (4) zu verändern, wobei das Drucksystem (7) wenigstens einen Druckkanal (8a,8b) umfasst, der geeignet ist, ein Medium einer von dem Kugelküken (4) abgewandten Rückseite (5a,6a) des Sitzrings (5,6) zuzuführen oder von dort abzuleiten, um den Druck auf den Sitzring (5,6) zu verändern, wobei zwischen der Rückseite (5a,6a) des Sitzringes (5,6) und einer angrenzenden, dem Sitzring (5,6) zugewandten Innenwandfläche (10) des Gehäuses (3) ein ringförmig umlaufender Ringraum (11) ausgebildet ist, mit dem der Druckkanal (8a,8b) korrespondiert, **dadurch gekennzeichnet, dass** das Drucksystem (7) eine Bypassleitung (32) aufweist, um bei Bedarf einen Druckausgleich zwischen dem Ringraum (11) und einem Totraum (18), der sich zwischen den Sitzringen (5, 6) und einer Oberseite des Kugelkükens und einer Innenwandfläche des Gehäuses befindet herzustellen, wobei das Drucksystem (7) wenigstens ein Absperrelement (33) aufweist, um die Bypassleitung (32) zu öffnen und/oder zu schließen.

2. Kugelhahn nach Anspruch 1,
**dadurch gekennzeichnet, dass**
der Ringraum (11) durch eine erste Abdichtung (12) und eine zweite Abdichtung (19) begrenzt ist, welche derart angeordnet sind, dass das von dem Druckkanal (8a,8b) zugeführte Medium eine Druckkraft erzeugt, die direkt auf die Rückseite (5a,6a) des Sitzrings (5,6) einwirkt.

3. Kugelhahn nach Anspruch 2,
**dadurch gekennzeichnet, dass**
die erste Abdichtung (12) zwischen der Innenwandfläche (10) des Gehäuses (3) und dem Sitzring (5,6) angeordnet ist und den Ringraum (11) zu dem Totraum (18) abdichtet, wobei in dem Totraum (18) im Normalbetrieb des Leitungssystems ein Druck anliegt, der dem Druck in Rohrleitungen (2a,2b) des Leitungssystem, durch welche das flüssige oder gasförmige Medium transportiert wird, entspricht.

4. Kugelhahn nach Anspruch 2 oder 3,
**dadurch gekennzeichnet, dass**
die erste Abdichtung (12) als Kolbendichtung ausgebildet ist und vorzugsweise einen O-Ring (13) und eine Gleitringdichtung (14) aufweist, wobei der O-Ring (13) vorzugsweise an der von der Innenwandfläche (10) abgewandten Rückseite der Gleitringdichtung (14) angeordnet ist.

5. Kugelhahn nach Anspruch 1,
**dadurch gekennzeichnet, dass**
in dem Ringraum (11) und/oder im Bereich einer Auslassöffnung des Druckkanals (8a,8b) eine ringförmig ausgebildete Dicht- und Anpresseinrichtung (120) eingesetzt ist.

6. Kugelhahn nach einem der Ansprüche 1 bis 5,
**dadurch gekennzeichnet, dass**
der Druck der auf die Rückseite des wenigstens einen Sitzrings (5,6) einwirkt auf den Druck im Leitungssystem und/oder einen Druck, der höher ist als der Druck im Leitungssystem, und/oder einen Druck, der geringer ist als der Druck im Leitungssystem, einstellbar ist.

7. Kugelhahn nach einem der Ansprüche 1 bis 6,
**dadurch gekennzeichnet, dass**
eine Steuereinrichtung (35) vorgesehen ist, um den Druckkanal (8a,8b) und/oder eine Druckeinheit (36) derart zu steuern, dass unabhängig von dem durch das Leitungssystem strömenden Medium ein Druck auf die Rückseite (5a,6a) wenigstens eines der Sitzringe (5,6) aufbringbar ist.

8. Kugelhahn nach Anspruch 7,
**dadurch gekennzeichnet, dass**
die Steuereinrichtung (35) ausgebildet ist, um den Druck an der Rückseite (5a,6a) des Sitzrings (5,6) auf einen Druck unterhalb des Drucks im Leitungssystem zu reduzieren.

9. Kugelhahn nach einem der Ansprüche 1 bis 8,
**dadurch gekennzeichnet, dass**
für jeden Sitzring (5,6) eine Federeinrichtung (16) vorgesehen ist, um den Sitzring (5,6) gegen das Kugelküken (4) zu drücken.

10. Verfahren zum Verstellen eines Kugelhahns nach Anspruch 1, wonach der Kugelhahn (1) in ein Leitungssystem zur Förderung von flüssigen oder gasförmigen Medien integriert und zum Öffnen und Schließen von Rohrleitungen (2a,2b) verstellt wird, wonach zum Verstellen des Kugelhahns (1) ein durch ein Medium, insbesondere ein Hydraulikmedium, erzeugter Druck, der an einer von einem Kugelküken (4) abgewandte Rückseite (5a,6a) wenigstens eines der Sitzringe (5,6) anliegt, derart veränderbar ist, dass der Druck, der auf die Rückseite (5a,6a) einwirkt, auf einen Druck unterhalb des Drucks in den Rohrleitungen (2a,2b) reduziert wird.

11. Verfahren zum Durchführen wenigstens eines Molchs durch einen in ein Leitungssystem (2) für flüssige oder gasförmige Medien eingesetzten Kugelhahn (1) nach einem der Ansprüche 1 bis 9, wobei der Kugelhahn (1) ein Kugelküken (4) und Sitzringe (5,6) aufweist, wonach ein oder mehrere Molche durch Rohrleitungen (2a,2b), in die der Kugelhahn (1) eingesetzt ist, durchgeführt werden, wonach wenigstens einer der Sitzringe (5,6) durch einen von einem Drucksystem (7) erzeugten und steuerbaren Druck an das Kugelküken (4) gedrückt wird, wonach das Drucksystem (7) eingerichtet ist, um den Druck unabhängig vom Druck in den Rohrleitungen (2a,2b) zu erzeugen, wonach das Drucksystem (7) einen Druck erzeugt, der ausreichend ist, um wenigstens einen der Sitzringe (5,6) an das Kugelküken (4) anzudrücken und in Kontakt mit dem Kugelküken (4) zu halten, während der Molch oder die Molche durch das Kugelküken (4) geführt wird bzw. werden.

12. Verfahren nach Anspruch 11,
**dadurch gekennzeichnet, dass**
nach dem Durchführen des Molchs oder der Molche durch das Kugelküken (4) der von dem Drucksystem (7) erzeugte Druck, der wenigstens einen der Sitzringe (5,6) an das Kugelküken (4) andrückt, so weit reduziert wird, dass der wenigstens eine Sitzring (5,6) von dem Kugelküken (4) abhebt.

13. Verfahren zum Reinigen eines Kugelhahns nach einem der Ansprüche 1 bis 9, wonach der Kugelhahn (1) in ein Leitungssystem zur Förderung von flüssigen oder gasförmigen Medien integriert und zum Öffnen und Schließen von Rohrleitungen (2a,2b) verstellt wird, wonach der Kugelhahn (1) ein Kugelküken (4) und Sitzringe (5,6) aufweist, wonach ein Drucksystem (7) vorgesehen ist, welches ausgebildet ist, um unabhängig von dem Druck in den Rohrleitungen (2a,2b) einen Druck zu erzeugen, welcher wenigstens einem der Sitzringe (5,6) derart zugeführt wird, dass der wenigstens eine Sitzring (5,6) mit einer den Sitzring (5,6) von der Anlagefläche an dem Kugelküken (4) wegdrückenden Kraft beaufschlagt wird,
**dadurch gekennzeichnet, dass**
der von dem Drucksystem (7) erzeugte Druck einem Totraum (18) zugeführt wird.

14. Verfahren nach Anspruch 13,
**dadurch gekennzeichnet, dass**
der von dem Drucksystem (7) erzeugte Druck gleich groß oder größer ist als der Druck in den Rohrleitungen (2a,2b).

15. Verfahren zum Abdichten eines Kugelhahns nach einem der Ansprüche 1 bis 9, wonach der Kugelhahn (1) in ein Leitungssystem zur Förderung von flüssigen oder gasförmigen Medien integriert und zum Öffnen und Schließen von Rohrleitungen (2a,2b) verstellt wird, wonach der Kugelhahn (1) ein Kugelküken (4) und Sitzringe (5,6) aufweist, wonach ein Drucksystem (7) vorgesehen ist, welches ausgebildet ist, um unabhängig vom Druck in den Rohrleitungen (2a,2b) einen Druck zu erzeugen, welcher wenigstens einem der Sitzringe (5,6) derart zugeführt wird, dass der wenigstens eine Sitzring (5,6) derart an das Kugelküken (4) angepresst wird, dass eine Anlagefläche zwischen dem Kugelküken (4) und dem Sitzring (5,6) abgedichtet wird, selbst wenn eine Dichtfläche (31) des wenigstens einen Sitzrings (5,6) beschädigt ist.

## Claims

1. A ball valve for a line system for conveying liquid or gaseous media, having a housing which has a ball plug (4) and seat rings (5, 6), wherein a pressure system (7), in particular a hydraulic system, which is independent of the pressure of the liquid or gaseous medium flowing through the line system, is provided in order to vary the contact pressure of at least one of the seat rings (5, 6) against the ball plug (4), wherein the pressure system (7) comprises at least one pressure channel (8a, 8b) which is suitable for feeding a medium to, or discharging said medium from, a rear side (5a, 6a), averted from the ball plug (4), of the seat ring (5, 6) in order to vary the pressure on the seat ring (5, 6), wherein an annularly encircling annular space (11) with which the pressure channel (8a, 8b) corresponds is formed between the rear side (5a, 6a) of the seat ring (5, 6) and an adjacent inner wall surface (10), facing toward the seat ring (5, 6), of the housing (3), **characterized in that**
the pressure system (7) has a bypass line (32) in order to produce a pressure equalization between the annular space (11) and a dead space (18) which is situated between the seat rings (5, 6) and a top side of the ball plug and an inner wall surface of the housing, when required, wherein the pressure system (7) has at least one shut-off element (33) in order to open and/or close the bypass line (32).

2. The ball valve as claimed in claim 1,
**characterized in that**
the annular space (11) is delimited by a first seal (12) and a second seal (19) which are arranged such that the medium fed from the pressure channel (8a, 8b) generates a pressure force which acts directly on the rear side (5a, 6a) of the seat ring (5, 6).

3. The ball valve as claimed in claim 2,
**characterized in that**
the first seal (12) is arranged between the inner wall surface (10) of the housing (3) and the seat ring (5, 6) and seals off the annular space (11) with respect to the dead space (18), wherein, during the normal operation of the line system, a pressure prevails in the dead space (18) which corresponds to the pressure in pipelines (2a, 2b), through which the liquid or gaseous medium is transported, of the line system.

4. The ball valve as claimed in claim 2 or 3,
**characterized in that**
the first seal (12) is designed as a piston seal and preferably has an O-ring (13) and a slide ring seal (14), wherein the O-ring (13) is preferably arranged on the rear side, averted from the inner wall surface (10), of the slide ring seal (14).

5. The ball valve as claimed in claim 1,
**characterized in that**
a sealing and pressure-exerting device (120) is inserted in the annular space (11) and/or in the region of an outlet opening of the pressure channel (8a, 8b).

6. The ball valve as claimed in one of claims 1 to 5,
**characterized in that**
the pressure that acts on the rear side of the at least one seat ring (5, 6) can be set to the pressure in the line system and/or to a pressure higher than the pressure in the line system and/or to a pressure lower than the pressure in the line system.

7. The ball valve as claimed in one of claims 1 to 6,
**characterized in that**
a control device (35) is provided for controlling the pressure channel (8a, 8b) and/or a pressure unit (36) such that a pressure can be applied to the rear side (5a, 6a) of at least one of the seat rings (5, 6) independently of the medium flowing through the line system.

8. The ball valve as claimed in claim 7,
**characterized in that**
the control device (35) is designed to reduce the pressure at the rear side (5a, 6a) of the seat ring (5, 6) to a pressure below the pressure in the line system.

9. The ball valve as claimed in one of claims 1 to 8,
**characterized in that**,
for each seat ring (5, 6), a spring device (16) is provided for pushing the seat ring (5, 6) against the ball plug (4).

10. A method for adjusting a ball valve as claimed in claim 1, in which method the ball valve (1) is integrated into a line system for conveying liquid or gaseous media and is adjusted in order to open and close pipelines (2a, 2b), in which method, for the adjustment of the ball valve (1), a pressure which is generated by a medium, in particular a hydraulic medium, and which acts on a rear side (5a, 6a), averted from a ball plug (4), of at least one of the seat rings (5, 6) is variable such that the pressure acting on the rear side (5a, 6a) is reduced to a pressure below the pressure in the pipelines (2a, 2b).

11. A method for leading at least one pig through a ball valve (1) according to one of claims 1 to 9 inserted into a line system (2) for liquid or gaseous media, wherein the ball valve (1) has a ball plug (4) and seat rings (5, 6), in which method one or more pigs are led through pipelines (2a, 2b) into which the ball valve (1) is inserted, in which method at least one of the seat rings (5, 6) is pressed against the ball plug (4) by means of a pressure which is generated and controllable by a pressure system (7), in which method the pressure system (7) is configured to generate the pressure independently of the pressure in the pipelines (2a, 2b) in which the pressure system (7) generates a pressure which is sufficient for pressing at least one of the seat rings (5, 6) against the ball plug (4) and holding it in contact with the ball plug (4) while the pig or the pigs is or are led through the ball plug (4).

12. The method as claimed in claim 11,
**characterized in that**,
after the pig or the pigs has or have been led through the ball plug (4), the pressure which is generated by the pressure system (7) and which presses at least one of the seat rings (5, 6) against the ball plug (4) is reduced to such an extent that the at least one seat ring (5, 6) lifts off from the ball plug (4).

13. A method for cleaning a ball valve according to one of claims 1 to 9, in which method the ball valve (1) is integrated into a line system for conveying liquid or gaseous media and is adjusted in order to open and close pipelines (2a, 2b), in which method the ball valve (1) has a ball plug (4) and seat rings (5, 6), in which method a pressure system (7) is provided which is designed to, independently of the pressure in the pipelines (2a, 2b), generate a pressure which is fed to at least one of the seat rings (5, 6) such that the at least one seat ring (5, 6) is acted on with a force which pushes the seat ring (5, 6) away from the contact surface on the ball plug (4),
**characterized in that**
the pressure generated by the pressure system (7) is fed to a dead space (18).

14. The method as claimed in claim 13,
**characterized in that**
the pressure generated by the pressure system (7) is equal to or higher than the pressure in the pipelines (2a, 2b).

15. A method for sealing a ball valve according to one of claims 1 to 9, in which method the ball valve (1) is integrated into a line system for conveying liquid or gaseous media and is adjusted in order to open and close pipelines (2a, 2b), in which method the ball valve (1) has a ball plug (4) and seat rings (5, 6), in which method a pressure system (7) is provided which is designed to, independently of the pressure in the pipelines (2a, 2b), generate a pressure which is fed to at least one of the seat rings (5, 6) such that the at least one seat ring (5, 6) is pressed against the ball plug (4) such that a contact surface between the ball plug (4) and the seat ring (5, 6) is sealed off even if a sealing surface (31) of the at least one seat ring (5, 6) is damaged.

## Revendications

1. Robinet à boisseau sphérique pour un système de conduites qui achemine des fluides liquides ou gazeux, comportant un boîtier, lequel présente un boisseau sphérique (4) et des bagues de siège (5, 6), un système de pression (7), en particulier un système hydraulique, indépendant de la pression du fluide liquide ou gazeux parcourant le système de conduites étant prévu pour modifier la pression appliquée par au moins une des bagues de siège (5, 6) sur le boisseau sphérique (4), le système de pression (7) comprenant au moins un canal de pression (8a, 8b) qui est apte à fournir un fluide à une face arrière (5a, 6a) de la bague de siège (5, 6) opposée au boisseau sphérique (4) ou à l'en évacuer pour modifier la pression exercée sur la bague de siège (5, 6), un espace annulaire (11) périphérique de forme circulaire, auquel le canal de pression (8a, 8b) correspond, étant prévu entre la face arrière (5a, 6a) de la bague de siège (5, 6) et une surface de paroi intérieure (10) du boitier (3) adjacente, tournée vers la bague de siège (5, 6), **caractérisé en ce que** le système de pression (7) présente une conduite de dérivation (32) pour réaliser, si nécessaire, une égalisation de pression entre l'espace annulaire (11) et un espace mort (18) qui se situe entre les bagues de siège (5, 6) et une face supérieure du boisseau sphérique et une surface de paroi intérieure du boîtier, le système de pression (7) présentant au moins un élément d'arrêt (33) pour ouvrir et/ou fermer la conduite de dérivation (32).

2. Robinet à boisseau sphérique selon la revendication 1, **caractérisé en ce que** l'espace annulaire (11) est délimité par un premier joint d'étanchéité (12) et un second joint d'étanchéité (19), lesquels sont disposés de telle sorte que le fluide fourni par le canal de pression (8a, 8b) génère une force de pression qui agit directement sur la face arrière (5a, 6a) de la bague de siège (5, 6).

3. Robinet à boisseau sphérique selon la revendication 2, **caractérisé en ce que** le premier joint d'étanchéité (12) est disposé entre la surface de paroi intérieure (10) du boîtier (3) et la bague de siège (5, 6) et étanchéifie l'espace annulaire (11) par rapport à l'espace mort (18), une pression étant appliquée dans l'espace mort (18) pendant le fonctionnement normal du système de conduites, laquelle pression correspond à la pression qui règne dans les conduites (2a, 2b) du système de conduites, conduites par lesquelles le fluide liquide ou gazeux est transporté.

4. Robinet à boisseau sphérique selon la revendication 2 ou 3, **caractérisé en ce que** le premier joint d'étanchéité (12) se présente sous la forme d'une garniture de piston et présente de préférence un joint torique (13) et une garniture mécanique d'étanchéité (14), le joint torique (13) étant disposé sur la face arrière de la garniture mécanique d'étanchéité (14) opposée à la surface de paroi intérieure (10).

5. Robinet à boisseau sphérique selon la revendication 1, **caractérisé en ce qu'**un dispositif d'étanchéité et de pression (120) de forme circulaire est installé dans l'espace annulaire (11) et/ou dans la zone d'une ouverture de sortie du canal de pression (8a, 8b).

6. Robinet à boisseau sphérique selon l'une quelconque des revendications 1 à 5, **caractérisé en ce que** la pression qui agit sur la face arrière d'au moins une bague de siège (5, 6) peut être réglée sur la pression qui règne dans le système de conduites et/ou sur une pression qui est supérieure à la pression qui règne dans le système de conduites et/ou sur une pression qui est inférieure à la pression qui règne dans le système de conduites.

7. Robinet à boisseau sphérique selon l'une quelconque des revendications 1 à 6, **caractérisé en ce qu'**un dispositif de commande (35) est prévu pour contrôler le canal de pression (8a, 8b) et/ou une unité de pression (36) de telle sorte qu'une pression puisse être appliquée sur la face arrière (5a, 6a) d'au moins une des bagues de siège (5, 6) indépendamment du fluide parcourant le système de conduites.

8. Robinet à boisseau sphérique selon la revendication 7, **caractérisé en ce que** le dispositif de commande (35) est conçu de manière à réduire la pression sur la face arrière (5a, 6a) de la bague de siège (5, 6) à une pression inférieure à la pression qui règne dans le système de conduites.

9. Robinet à boisseau sphérique selon l'une quelconque des revendications 1 à 8, **caractérisé en ce qu'**un moyen formant ressort (16) est prévu pour chaque bague de siège (5, 6) dans le but de presser la bague de siège (5, 6) contre le boisseau sphérique (4).

10. Procédé pour régler un robinet à boisseau sphérique selon la revendication 1, dans lequel le robinet à boisseau sphérique (1) est intégré dans un système de conduites qui achemine des fluides liquides ou gazeux et est réglé pour ouvrir et fermer des conduites (2a, 2b), dans lequel, pour régler le robinet à boisseau sphérique (1), une pression générée par un fluide, en particulier un fluide hydraulique, qui est appliquée sur une face arrière (5a, 6a) d'au moins une des bagues de siège (5, 6) opposée à un boisseau sphérique (4), peut être modifiée de telle sorte que la pression qui agit sur la face arrière (5a, 6a) soit réduite à une pression inférieure à la pression qui règne dans les conduites (2a, 2b).

11. Procédé pour la mise en œuvre d'au moins un écouvillon par un robinet à boisseau sphérique (1) installé dans un système de conduites (2) pour des fluides liquides ou gazeux selon l'une quelconque des revendications 1 à 9, dans lequel le robinet à boisseau sphérique (1) présente un boisseau sphérique (4) et des bagues de siège (5, 6), dans lequel un ou plusieurs écouvillon(s) est (sont) mis en œuvre à travers les conduites (2a, 2b) dans lesquelles le robinet à boisseau sphérique (1) est installé, dans lequel au moins une des bagues de siège (5, 6) est pressée contre le boisseau sphérique (4) par une pression qui est générée et qui peut être contrôlée par un système de pression (7), dans lequel le système de pression (7) est installé pour générer la pression indépendamment de la pression qui règne dans les conduites (2a, 2b), dans lequel le système de pression (7) génère une pression qui est suffisante pour appliquer au moins une des bagues de siège (5, 6) sur le boisseau sphérique (4) et pour garder le contact avec le boisseau sphérique (4) pendant que l'écouvillon ou les écouvillons traverse(nt) le boisseau sphérique (4).

12. Procédé selon la revendication 11, **caractérisé en ce que**, une fois que l'écouvillon ou les écouvillons a (ont) traversé le boisseau sphérique (4), la pression générée par le système de pression (7), qui applique au moins une des bagues de siège (5, 6) sur le boisseau sphérique (4), est réduite au point que ladite au moins une bague de siège (5, 6) se soulève du boisseau sphérique (4).

13. Procédé pour nettoyer un robinet à boisseau sphérique selon l'une quelconque des revendications 1 à 9, dans lequel le robinet à boisseau sphérique (1) est intégré dans un système de conduites qui achemine des fluides liquides ou gazeux et est réglé pour ouvrir et fermer des conduites (2a, 2b), dans lequel le robinet à boisseau sphérique (1) présente un boisseau sphérique (4) et des bagues de siège (5, 6), dans lequel un système de pression (7) est prévu, ledit système de pression étant conçu de manière à générer une pression indépendamment de la pression qui règne dans les conduites (2a, 2b), ladite pression étant fournie à au moins une des bagues de siège (5, 6) de telle sorte que ladite au moins une bague de siège (5, 6) soit sollicitée par une force qui repousse la bague de siège (5, 6) de la surface d'appui sur le boisseau sphérique (4), **caractérisé en ce que** la pression générée par le système de pression (7) est fournie à un espace mort (18).

14. Procédé selon la revendication 13, **caractérisé en ce que** la pression générée par le système de pression (7) est égale ou supérieure à la pression qui règne dans les conduites (2a, 2b).

15. Procédé pour étanchéifier un robinet à boisseau sphérique selon l'une quelconque des revendications 1 à 9, dans lequel le robinet à boisseau sphérique (1) est intégré dans un système de conduites (2a, 2b) qui achemine des fluides liquides ou gazeux et est réglé pour ouvrir et fermer des conduites (2a, 2b), dans lequel le robinet à boisseau sphérique (1) présente un boisseau sphérique (4) et des bagues de siège (5, 6), dans lequel un système de pression (7) est prévu, ledit système de pression étant conçu de manière à générer une pression indépendamment de la pression qui règne dans les conduites (2a, 2b), ladite pression étant fournie à au moins une des bagues de siège (5, 6) de telle sorte que ladite au moins une bague de siège (5, 6) soit pressée contre le boisseau sphérique (4) de telle sorte qu'une surface d'appui entre le boisseau sphérique (4) et la bague de siège (5, 6) soit étanchéifiée même si une surface d'étanchéité (31) d'au moins une bague de siège (5, 6) est endommagée.
